(19) Europäisches Patentamt
European Patent Office
Office européen des brevets

(11) EP 2 682 269 B1

(12) **EUROPEAN PATENT SPECIFICATION**

(45) Date of publication and mention of the grant of the patent:
**07.10.2015 Bulletin 2015/41**

(21) Application number: **12752090.6**

(22) Date of filing: **02.03.2012**

(51) Int Cl.:
***B41J 2/165*** *(2006.01)* ***B41J 2/175*** *(2006.01)*
***C09D 11/30*** *(2014.01)* ***C09D 11/38*** *(2014.01)*

(86) International application number:
**PCT/JP2012/001447**

(87) International publication number:
**WO 2012/117742 (07.09.2012 Gazette 2012/36)**

(54) **METHOD FOR CLEANING INKJET RECORDING HEAD, AND METHOD FOR FORMING IMAGE**

VERFAHREN ZUR REINIGUNG EINES TINTENSTRAHLAUFZEICHNUNGSKOPFS UND BILDHERSTELLUNGSVERFAHREN

PROCÉDÉ POUR NETTOYER UNE TÊTE D'IMPRESSION À JET D'ENCRE, ET PROCÉDÉ POUR FORMER UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.03.2011 JP 2011044861**
**28.04.2011 JP 2011100642**

(43) Date of publication of application:
**08.01.2014 Bulletin 2014/02**

(73) Proprietor: **Konica Minolta, Inc.**
**Tokyo 100-7015 (JP)**

(72) Inventors:
- **KATO, Masami**
**Chiyoda-ku**
**Tokyo 100-7015 (JP)**
- **KANEKO, Tadasuke**
**Chiyoda-ku**
**Tokyo 100-7015 (JP)**

(74) Representative: **Gille Hrabal**
**Brucknerstrasse 20**
**40593 Düsseldorf (DE)**

(56) References cited:
**JP-A- 2005 161 870** **JP-A- 2010 031 402**
**JP-A- 2010 168 433**

EP 2 682 269 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a method for washing an inkjet recording head and a method for forming an inkjet image including a washing step thereof.

Background Art

Inkjet inks for industrial use have been developed so as to be used for direct printing on recording media that hardly absorb inks, e.g., recording media having poor water absorbability such as resin- or clay-coated paper, recording media coated with resin components, or resin films themselves.

Examples of inkjet inks applicable to such recording media include solvent inkjet inks containing organic solvents as vehicles and ultraviolet curable inkjet inks containing photopolymerizable monomers as their main components. In the solvent inkjet inks, the solvents are dried, and the solvent components dissipate in the air. This causes generation of a large amount of volatile organic compounds (VOC), which is nowadays a socially disputed issue. In addition, odors and adverse safety effects on workers are concerned, and facilities, such as sufficient ventilation systems, for overcoming such concerns are required in use of the ink. In contrast, ultraviolet curable inkjet inks can be cured immediately after printing with UV irradiation and thus are substantially free of VOC. Some of the ultraviolet curable inkjet inks, however, have skin sensitization potential due to monomers contained therein. In addition, inkjet printers are required to be equipped with expensive ultraviolet light sources. Accordingly, fields to which the ultraviolet curable inkjet inks can be applied are inevitably limited. Furthermore, upon printing on glossy sheets, the glossiness is considerably lost at areas where the inks are applied, which makes it difficult to yield an image having high quality.

Against such a background, aqueous inkjet inks have been extensively developed, which are primarily composed of water, which have a low environmental load and have been widely used at home and which can also be used for direct printing on recording media having poor ink absorbability (e.g., see PTL 1). However, recording media having poor ink absorbability, such as coated paper and resin film, have low surface energy in many cases and do not absorb normal aqueous inkjet inks. Consequently, inkjet ink droplets landed on such a recording medium are repelled or generate white streaks in an image, resulting in degradation of image quality. Moreover, the recording medium has no inkjet ink absorbency and coloring materials are not absorbed in the recording medium, resulting in a decrease in image durability such as friction resistance.

As a means for preventing the above repelling of an inkjet ink, adding a surfactant or a water soluble organic solvent having low surface tension (energy) to the inkjet ink causes the surface tension (energy) of the inkjet ink to decrease and thereby prevents occurrence of repelling to some extent. However, addition of an excess amount of a surfactant causes a decrease of ink repelling on the nozzle surface of the inkjet head, resulting in a problem such as deflection of ejection direction or nozzle defects caused by nozzle clogging. Moreover, the inkjet ink is condensed in the process of drying, and if the surfactant is precipitated, the ejection stability is further degraded. The precipitation problem does not occur with an organic solvent with low surface tension; in many cases, however, it does not increase the friction resistance, which is problematic from the viewpoint of ejection stability over an extended period of time.

To solve the above problems, PTL 2 proposes a binder resin and an aqueous ink composition containing β-alkoxypropionamides as a water soluble organic solvent. Moreover, use of this aqueous ink composition for a nonabsorbent base material such as a vinyl chloride sheet is also proposed. However, the results of investigation by the present inventors show that it is difficult to stably eject the aqueous ink composition described in PTL 2 from the inkjet head, a large quantity of a dry ink substance or the like is stuck to the nozzle surface during printing, causing deflection of ejection direction of the nozzle or nozzle defects, which is insufficient from the viewpoint of stability. In addition, during printing on a nonabsorbent recording medium, printing is performed while heating the recording medium to prevent repelling or to improve friction resistance, but particularly ejection performance often becomes unstable.

A resin is added to an aqueous ink to improve the fixability with respect to a low ink absorbent recording medium. However, when a resin-containing ink is dried and solidified while being stuck to the ink ejection portion of the recording head, the ink cannot be removed adequately by only wiping it from the ink ejection portion with a blade. A washing mechanism is therefore known which wipes the ink stuck to the ink ejection portion with an outer peripheral surface of a roller impregnated with a predetermined washing liquid (e.g., see PTL 3).

Citation List

Patent Literature

PTL 1
Japanese Patent Application Laid-Open No. 2008-208153
PTL 2
Japanese Patent Application Laid-Open No. 2010-168433
PTL 3
Japanese Patent Application Laid-Open No. 11-78112

Summary of Invention

Technical Problem

The present invention has been made in view of the above problems, and an object of the present invention is to provide a method for forming an inkjet image that provides a repelling-free high quality image with excellent ejection stability, good image durability, and moreover high gloss.

Furthermore, when a standby state in which an inkjet recording apparatus performs no recording operation continues for a long time, the present invention prevents a washing liquid with which a roller is impregnated from evaporating, causing the ink resin absorbed in the roller to dry and thereby causing solidification of the roller. Solidification of the roller may not only prevent the roller from appropriately wiping the ink stuck to the ink ejection portion but also cause the roller to contact the nozzle of the ink ejection portion, causing damage to the nozzle. The problem to be solved is therefore to provide an inkjet recording apparatus capable of appropriately wiping an ink stuck to an ink ejection portion using a roller upon resuming recording operation after a standby state and suppressing damage to the nozzle of the ink ejection portion.

Solution to problem

The objects of the present invention can be achieved by the following aspects:

[1] A method for washing a recording head including:

an image forming step of ejecting an inkjet ink containing at least water, a coloring material, a binder resin and a water soluble organic solvent represented by general formula (1) from a recording head to form an image on a recording medium; and

a washing step of washing the recording head, after the image forming step, using an ink absorbing member that absorbs the inkjet ink and a wiping member that wipes a nozzle surface of the recording head using a wipe unit wherein the ink absorbing member holds a cleaning liquid containing an organic solvent:

[Formula 1]

General formula (1)

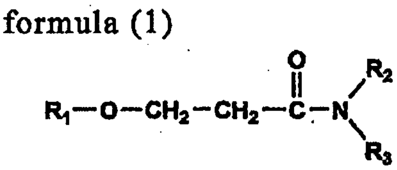

wherein $R_1$ represents a linear or branched alkyl group having 1 to 6 carbon atoms, $R_2$ and $R_3$ each represent a hydrogen atom or a linear or branched alkyl group having 1 to 4 carbon atoms, and $R_2$ and $R_3$ may be the same or different.

[2] The method for washing a recording head according to [1], in which the washing step is performed by a roller impregnated with a washing liquid.

[3] A method for forming an image including, after the washing step according to [1], an image forming step of forming an image by ejecting the inkjet ink onto the recording medium from the recording head.

[4] A method for forming an image including:

a washing step of washing a recording head using an ink absorbing member that absorbs an inkjet ink and a wiping member that wipes a nozzle surface of the recording head using a wipe unit wherein the ink absorbing member holds a cleaning liquid containing an organic solvent; and

an image forming step of ejecting an inkjet ink containing at least water, a coloring material, a binder resin and a water soluble organic solvent represented by general formula (1) from the recording head after the washing step to form an image on a recording medium:

[Formula 2]

General formula (1)

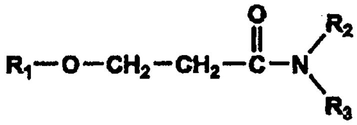

wherein $R_1$ represents a linear or branched alkyl group having 1 to 6 carbon atoms, $R_2$ and $R_3$ each represent a hydrogen atom or a linear or branched alkyl group having 1 to 4 carbon atoms, and $R_2$ and $R_3$ may be the same or different.

[5] The method for forming an image according to [4], in which the washing step is performed by a roller impregnated with a washing liquid.
[6] The method for forming an image according to [4] or [5], in which the binder resin is one selected from an acrylic-based resin, a polyurethane resin, a polyvinyl-based resin and a polyolefin resin.
[7] The method for forming an image according to [6], in which the binder resin is an acrylic-based resin.
[8] The method for forming an image according to [3] or [4], in which the inkjet ink contains a fluorine-based surfactant or a silicone-based surfactant.
[9] The method for forming an image according to [3] or [4], in which the surface of the recording medium is composed of a resin component.

Advantageous Effects of Invention

The present invention can provide a method for forming an inkjet image that provides a repelling-free high quality image with excellent ejection stability, good image durability, and moreover high gloss. Furthermore, the present invention can prevent solidification of the roller in a standby state, and can thereby appropriately wipe the ink stuck to the ink ejection portion using the roller upon resuming recording operation after the standby state and suppress damage to the nozzle of the ink ejection portion.

Brief Description of Drawings

FIG. 1 is a perspective view illustrating a schematic configuration of an inkjet printer to which a wipe unit according to the present invention is applied;
FIG. 2 is a perspective view illustrating a method of supplying a cleaning liquid to the wipe unit;
FIG. 3 is a perspective view of main components of the wipe unit when pressed against a recording head;
FIGS. 4A and 4B illustrate a sheet-like flexible member in a fixed state; FIG. 4A is a cross-sectional view when a pressing force is weak and FIG. 4B is a cross-sectional view when a pressing force is strong;
FIG. 5 is a perspective view illustrating a schematic configuration of an inkjet recording apparatus according to an embodiment to which the present invention is applied;
FIG. 6 is a functional block diagram illustrating main components of the inkjet recording apparatus in FIG. 5;
FIGS. 7A and 7B are diagrams illustrating a location of a wiping apparatus with respect to a recording head of the inkjet recording apparatus in FIG. 5;
FIG. 8 is a flowchart illustrating an example of operation relating to wiping processing by the inkjet recording apparatus in FIG. 5;
FIGS. 9A, 9B, 9C and 9D are diagrams schematically illustrating locations of the recording head and the wiping apparatus in the wiping processing in FIG. 8;
FIG. 10 is a flowchart illustrating an example of operation relating to standby processing by the inkjet recording apparatus in FIG. 5;
FIGS. 11A and 11B are diagrams schematically illustrating operation of a cleaning roller of the wiping apparatus in the standby processing in FIG. 10; and

FIGS. 12A and 12B are diagrams schematically illustrating a modification example of the operation of the wiping apparatus during standby processing by the inkjet recording apparatus in FIG. 5.

Description of Embodiments

Embodiments of the present invention will now be described in detail.

A washing method of the present invention uses an inkjet printer provided with a wiping mechanism that wipes a nozzle surface of a recording head using a wipe unit having an ink absorbing member that absorbs a cleaning liquid containing an organic solvent. Furthermore, the method for forming an image according to the present invention forms an image by ejecting onto a recording medium, an inkj et ink containing water, a coloring material, a binder resin and a water soluble organic solvent containing β-alkoxypropionamides represented by general formula (1).

A "recording medium, a surface of which is coated with a resin component" in the specification of the present application more specifically refers to a resin plate of polystyrene, ABS (acrylonitrile-butadiene-styrene copolymer) or the like, a plastic film of vinyl chloride, polyethylene terephthalate or the like or these plastic films pasted to a surface of a base material of paper or the like. The recording medium is a medium, on a recording surface of which water hardly permeates.

The present inventors have studied a method for forming an inkjet image using a water-based inkjet ink which could stably eject the ink for a long period of time. The present inventors have made many studies, particularly on a method for forming an inkjet image using a water-based inkjet ink which could obtain a repelling-free high quality image with excellent image durability and glossiness on a recording medium or coated paper, whose surface is formed of a resin component for applications such as signature.

The above-described recording medium or coated paper whose surface is formed of a resin component has a poor water absorbing property, and the surface energy of the recording medium is low, and therefore even when printing is performed using a water-based inkjet ink, the ink is not absorbed but repelled, causing image distortion. Furthermore, fixability of the ink to the recording medium is also low and image durability is poor. In the case where a large quantity of a resin component or an additive such as a surfactant is added to the inkjet ink to solve such a problem, the inkjet ink stuck to the nozzle surface during printing is dried and adhered, causing ejection failures such as nozzle clogging and nozzle deflection.

The present invention uses an inkjet printer provided with a mechanism of wiping a nozzle surface of an inkjet recording head using a wipe unit having an ink absorbing member that absorbs a cleaning liquid containing an organic solvent. Such an inkjet printer is loaded with a water-based inkjet ink containing a water soluble organic solvent including water, a coloring material, a binder resin and β-alkoxypropionamides represented by above-described general formula (1) to print an image. In this way, it is possible to easily wipe the ink which is stuck to the nozzle surface and dried, and consequently realize excellent ejection stability. In addition, it is also possible to reduce repelling of the ink on the recording medium and improve image durability.

«Inkjet ink»

The inkjet ink in the present invention contains β-alkoxypropionamides represented by general formula (1) (hereinafter, also referred to as "β-alkoxypropionamides"). β-alkoxypropionamides are water soluble organic solvents having various properties such that they can be easily mixed with various solvents, and dissolve substances over a wide range of polarities, and having low surface tension.

Even when the inkjet ink containing β-alkoxypropionamides is stuck to the nozzle surface, the ink can be wiped using an ink absorbing member that holds a cleaning liquid, and excellent ejection stability can be thereby obtained. The reasons can be assumed as follows.

β-alkoxypropionamides have low surface tension. Thus, after the water-based ink containing β-alkoxypropionamides is stuck to the nozzle surface, β-alkoxypropionamides are more likely to be located uniformly on the surface on which an image is formed and drying is progressing in the process of water evaporation and drying. In addition, since β-alkoxypropionamides exhibit a high solubility to various resins and surfactants or the like, it is assumed that even when drying of the ink progresses, ink viscosity is less likely to increase to such an extent that wiping thereof becomes difficult.

Thus, using an inkjet printer having a maintenance mechanism with a periodic wiping system using the ink absorbing member that holds a cleaning liquid containing an organic solvent makes it possible to maintain stable ejection performance for a long period of time even when performing continuous image printing.

Moreover, β-alkoxypropionamides also function as an organic solvent provided with low surface tension performance. Thus, β-alkoxypropionamides cause surface tension of the inkjet ink to decrease and can prevent image failures such as repelling, spots or white streaks during printing. Moreover, β-alkoxypropionamides represented by general formula (1) exhibit a high solubility to a resin component making up the recording medium, and an ink droplet after landing permeates into the recording medium including the resin component. Therefore, β-alkoxypropionamides

dissolve or swell the resin component of the recording medium and cause the coloring material or other ink solvents to enter the recording medium and become integrated with the recording medium. This increases adhesiveness of the image formed and improves image durability.

β-alkoxypropionamides represented by general formula (1)]

β-alkoxypropionamides represented by general formula (1) contained in the inkjet ink (hereinafter, also simply referred to as "ink") will be described.

In general formula (1), $R_1$ represents a linear or branched alkyl group having 1 to 6 carbon atoms, $R_2$ and $R_3$ each represent a hydrogen atom or a linear or branched alkyl group having 1 to 4 carbon atoms, and $R_2$ and $R_3$ may be the same or different.

By assuming $R_1$, $R_2$ and $R_3$ as the substituent groups defined above, it is possible to enhance compatibility with water while maintaining solubility and permeability of the resin component of β-alkoxypropionamides.

$R_1$ is preferably a methyl group, ethyl group, or n-butyl group, and $R_2$ and $R_3$ are preferably methyl groups or ethyl groups.

The content of β-alkoxypropionamides represented by general formula (1) in the ink is preferably 0.1 wt% or more and 35 wt% or less; or more preferably 1.0 wt% or more and 15 wt% or less based on the total mass of the ink from the viewpoints of a balance between friction resistance of the image and image quality.

Specific examples of β-alkoxypropionamides represented by general formula (1) will be shown below, but the present invention is not limited to these compound examples.

1) 3-methoxy-N,N-dimethylpropionamide
2) 3-ethoxy-N,N-dimethylpropionamide
3) 3-propyloxy-N,N-dimethylpropionamide
4) 3-butoxy-N,N-dimethylpropionamide
5) 3-pentyloxy-N,N-dimethylpropionamide
6) 3-hexyloxy-N,N-dimethylpropionamide
7) 3-methoxy-N,N-diethylpropionamide
8) 3-methoxy-N,N-dipropylpropionamide
9) 3-methoxy-N,N-dibutylpropionamide
10) 3-ethoxy-N,N-diethylpropionamide
11) 3-ethoxy-N,N-dipropylpropionamide
12) 3-ethoxy-N,N-dibutylpropionamide
13) 3-propyloxy-N,N-diethylpropionamide
14) 3-propyloxy-N,N-dipropylpropionamide
15) 3-propyloxy-N,N-dibutylpropionamide
16) 3-butoxy-N,N-diethylpropionamide
17) 3-butoxy-N,N-dipropylpropionamide
18) 3-butoxy-N,N-dibutylpropionamide
19) 3-pentyloxy-N,N-diethylpropionamide
20) 3-pentyloxy-N,N-dipropylpropionamide
21) 3-hexyloxy-N,N-diethylpropionamide

A specific method of manufacturing β-alkoxypropionamides represented by general formula (1) is described, for example, in Japanese Patent Application Laid-Open No. 2009-185079 and the specification of WO2008/102615, and is on sale under the trade name "Ecuamide" by Idemitsu Kosan Co., Ltd.

β-alkoxypropionamides represented by general formula (1) are provided with properties of dissolving and mixing substances in a wide range of polarities. Therefore, in the process of drying of an ink, β-alkoxypropionamides have an effect of preventing an additive in the ink from precipitating. Moreover, β-alkoxypropionamides represented by general formula (1) also have a function as an organic solvent of low surface tension and has an effect of lowering surface tension of the ink and preventing repelling or occurrence of spots or white streaks during printing. Furthermore, when the water content of the ink stuck to the nozzle surface of the inkjet head evaporates, β-alkoxypropionamides suppress precipitation of an additive dissolved in the ink and β-alkoxypropionamides are located uniformly more oriented toward the surface. Thus, β-alkoxypropionamides can suppress adherence of the solid content of the ink to the nozzle surface.

Moreover, as described above, β-alkoxypropionamides represented by general formula (1) have a high solubility to the resin component making up the recording medium. Thus, an ink droplet after landing on the recording medium is more likely to permeate into the recording medium containing the resin component. As a result, drying of the ink after landing is accelerated and image durability of the image formed improves due to the high solubility or swelling performance

with respect to the resin component of the recording medium.

Furthermore, permeation of the ink into the recording medium accelerates the drying of an ink droplet, and thereby reduces a phenomenon of causing degradation of image quality such as "ink coalescence" which occurs when the ink remains on the surface of the recording medium. "Ink coalescence" is a phenomenon in which when absorption of an ink dot after landing into the recording medium or drying is retarded or interrupted, ink droplets remaining undried for a long time on the recording medium come into contact with each other to coalesce into one body. When neighboring ink droplets coalesce into one body, the dot shape may change (from a perfect circle to an amorphous shape) or ink droplets may be unevenly distributed by surface tension in the coalesced droplet or an area with a high printing rate of a high concentration portion, producing density unevenness. This may significantly degrade the image quality.

Such "ink coalescence" conspicuously emerges when printing is performed on a recording medium which is likely to repel ink droplets or a recording medium having poor ink absorbability, that is, a recording medium having low surface energy or having a surface composed of nonabsorbent resins. Applying an ink containing β-alkoxypropionamides represented by general formula (1) makes it possible to effectively prevent ink coalescence.

[Water soluble organic solvents other than β-alkoxypropionamides]

Next, water soluble organic solvents other than β-alkoxypropionamides applicable to the present invention will be described.

A water soluble organic solvent having low surface tension performance may further be added to an ink as required. Adding a water soluble organic solvent having low surface tension performance supplements the effect by β-alkoxypropionamides represented by general formula (1). Thus, it is possible to form a high quality printed image with well-controlled ink mixing on a recording medium made of various types of hydrophobic resins, or paper supporting bodies having a low ink absorption speed such as actual printing stock.

For the ink according to the present invention, glycol ether or 1,2-alkanediols are preferably added thereto, and to be more specific, a water soluble organic solvent having the following low surface tension performance is preferably used.

Examples of glycol ether include ethylene glycol monoethyl ether, ethylene glycol monobutyl ether, diethylene glycol monoethyl ether, diethylene glycol monobutyl ether, triethylene glycol monobutyl ether, propylene glycol monopropyl ether, dipropylene glycol monomethyl ether, dipropylene glycol monopropyl ether, and tripropylene glycol monomethyl ether.

Furthermore, examples of 1,2-alkanediols include 1,2-butanediol, 1,2-pentandiol, 1,2-hexanediol and 1,2-heptanediol.

Furthermore, when a resin material such as vinyl chloride is used as the recording medium, it is preferable to add a solvent capable of dissolving, softening or swelling resins from the viewpoints of improving adhesion and friction resistance of the image.

Examples of such a solvent include a cyclic solvent containing nitrogen or sulfur atoms, a cyclic ester solvent, lactate, alkylene glycol diether, alkylene glycol monoether monoester and dimethyl sulfoxide.

Preferable specific examples of the cyclic solvent include a cyclic amide compound such as 2-pyrrolidone, N-methyl-2-pyrrolidone, N-ethyl-2-pyrrolidone, 1,3-dimethyl-2-imidazolidinone, ε-caprolactam, methyl caprolactam and 2-azacyclooctanone. Preferable specific examples of the cyclic solvent containing sulfur atoms include a cyclic 5- to 7-membered ring compound such as sulfolane.

Preferable specific examples of the cyclic ester solvent include γ-butyrolactone, ε-caprolactone and examples of the lactate include butyl lactate and ethyl lactate.

Preferable specific examples of the alkylene glycol diether include diethylene glycol diethyl ether and preferable specific examples of the alkylene glycol monoether monoester include diethylene glycol monoethyl monoacetate.

Other examples include alcohols (e.g., methanol, ethanol, propanol, isopropanol, butanol, isobutanol, secondary butanol, tertiary butanol), polyalcohols (e.g., ethylene glycol, diethylene glycol, triethylene glycol, polyethylene glycol, propylene glycol, dipropylene glycol, polypropylene glycol, propanediol, butylene glycols other than 1,2-, hexanediols other than 1,2-, pentandiols other than 1,2-, glycerin, hexanetriol, thiodiglycol), amines (e.g., ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine), amides (e.g., formamide, N,N-dimethylformamide, N,N-dimethylacetamide).

[Binder resin]

The ink used in the present invention preferably contains a binder resin as well as water, a coloring material and β-alkoxypropionamides represented by general formula (1) as a water soluble organic solvent. A main effect of compounding a binder resin with the ink is an improvement of image durability, image glossiness and image quality.

The binder resin has a non-ink-absorbing recording medium composed of a material such as vinyl chloride, adhesion to the coated paper for printing and the like; can improve the friction resistance of images formed.

Further, the characteristics required for the binder resin is that it can increase the gloss of the image to be formed, or enhance the optical density. The binder resin itself needs to exhibit a high transparency in the coating film, and also have a compatibility with a coloring material such as pigment or pigment dispersion resins.

The binder resin may be in the form of either water soluble resins or water-based dispersion type polymer particles or both. Use of water soluble resins is particularly preferable from the viewpoint of overall performance. Examples of the preferred the binder resin that satisfies these functions include water soluble resins such as acrylic-based resins, urethane-based resins, styrene-based resins, polyvinyl-based resins, polyamide-based resins, polyolefin-based resins, polyester-based resins, and water-based dispersion type polymer particles. Examples of the acrylic-based resin include polyacrylic copolymer resins, styrene-acrylic copolymer resins, acrylonitrile-acrylic copolymer resins, silicone-modified acrylic resins; examples of the urethane-based resin include polyurethane resins and urethane-acrylic copolymer resins; examples of the styrene-based resin include polystyrene resins and styrene-butadiene copolymer resins; examples of the polyvinyl-based resin include vinyl acetate-acrylic copolymer resins, vinyl acetate -ethylene copolymer resins; examples of the polyolefin-based resin include polyethylene resins and polypropylene resins; examples of the polyester-based resin include polyester resins and acrylic-polyester emulsion, but without being limited to these examples, other conventionally known water-based dispersion type polymer particles may also be used. Furthermore, examples of the water soluble resin include acrylic-based resins, styrene-acrylic-based resins, acrylonitrile-acrylic-based resins, vinyl acetate-acrylic-based resins, polyvinyl alcohol-based resins, polyurethane resins, polyamide-based resins, polyester resins, and polyolefin resins. Among all, the water soluble resin is preferably at least one type of a resin selected from an acrylic-based resin, a polyamide-based resin, a polyvinyl alcohol-based resin and a polyurethane-based resin, and an acrylic-based copolymer resin is particularly preferable as the water soluble resin.

Among the above-described binder resin, an acrylic-based resin, a polyurethane-based resin, a polyvinyl-based resin, and a polyolefin-based resin are preferable from the viewpoints of excellent adhesiveness to a recording medium and excellent durability when added to an ink. Among them, the acrylic-based copolymer resin in particular increases glossiness of an image formed. Furthermore, as is well known, the acrylic-based copolymer resin is appropriate because it can be freely selected and designed from a great variety of monomers, can easily be polymerized and manufactured at low cost. As described above, an acrylic-based copolymer resin having a high degree of freedom of design is appropriate to satisfy many requirements for when adding it to an ink.

These resins may be manufactured using a publicly known polymerization method or commercially available resins may be used. Regarding commercially available water-based dispersion type polymer particles, examples of acrylic-based resins include Joncryl series (manufactured by BASF), voncoat series (manufactured by DIC Corporation), newcoat SFK series (manufactured by Shin-Nakamura Chemical Co., Ltd.); examples of urethane-based resins include superflex series (manufactured by DAIICHI KOGYO SEIYAKU Co., Ltd.), PERMARIN series (manufactured by Sanyo Chemical Industries Ltd.); examples of polyvinyl-based resins include Vinyblan series (manufactured by Nissin Chemical Industry CO., Ltd.), SUMIKAFLEX series, SUMIELITE series (manufactured by Sumika Chemtex Co., Ltd.); examples of polyolefin-based resins include AQUACE 507, 840, 515, 552 (manufactured by BYK Japan KK); examples of polyester-based resins include Fine Tex ES-860, ES-650 (manufactured by DIC Corporation). Examples of commercially available water soluble resins include Joncryl series (manufactured by BASF) which is acrylic-based resin, but water soluble resins may also be manufactured using a publicly known polymerization method.

A glass transition temperature (Tg) of the binder resin is preferably 0°C or higher and 120°C or lower. A Tg of 0°C or more can provide sufficient friction resistance and can inhibit occurrence of blocking. A Tg of 120°C or less can provide a desired friction resistance. It is believed that the Tg prevents the image layer after drying from excessively hardening and thus embrittling.

When water-based dispersion type polymer particles are added to the ink, an average particle diameter thereof is preferably on the order of 500 nm or less, and more preferably 10 to 300 nm from the viewpoint of dispersion stability in long-term storage.

As a particularly preferable form of binder resins, following water soluble resin A provided with various characteristics can be used.

(Water soluble resin A)

<Acid value of water soluble resin A>

An acid value of water soluble resin A is preferably 50 mgKOH/g or more and 130 mgKOH/g or less. An acid value of 50 mgKOH/g or more increases a water solubility of resins, allowing resins to dissolve into water more easily; an acid value of 130 mgKOH/g or less is preferable from the viewpoint of adding high glossiness to an image.

[Method of measuring acid value]

An acid value of a water soluble resin can be calculated according to the following method. Resins 10 g are weighed and placed into a 300 ml triangular flask, approximately 50 ml of a mixed solvent of ethanol:benzene=1:2 is added thereto and the resin is dissolved. Next, using a phenolphthalein indicator, the dissolved resin is titrated in a pre-standardized 0.1 mol/L ethanol solution of potassium hydroxide. An acid value (mgKOH/g) is calculated from the amount of the ethanol solution of potassium hydroxide used for titration according to calculation equation 1. Note that in the case where the resin is not dissolved in the approximately 50 ml mixed solvent of ethanol:benzene=1:2 depending on the type of resin, either ethanol 50 ml or an approximately 50 ml mixed solvent of ethanol/pure water=1:1 is selected as the solvent type into which the resin is dissolved, and titration is performed using the same operation in the rest of the measurement.

**Calculation equation 1**

$$A=(B\times f\times 5.611)/S$$

In the equation, A is the acid value (mgKOH/g) of the resin, B is the amount (ml) of the 0.1 mol/L ethanol solution of potassium hydroxide used for titration, f is a factor of the 0.1 mol/L ethanol solution of potassium hydroxide, S is the mass (g) of the resin and 5.611 is the formula weight (56.11/10) of potassium hydroxide.

<Glass transition temperature of water soluble resin A>

The glass transition temperature (Tg) of water soluble resin A is preferably 30°C or higher and 100°C or lower. A Tg of 30°C or higher can provide sufficient friction resistance and can inhibit occurrence of blocking. A Tg of 100°C or less can provide a desired friction resistance. It is believed that such Tg prevents the image layer after drying from excessively hardening and thus embrittling.

<Weight average molecular weight of water soluble resin A>

A weight average molecular weight (Mw) of water soluble resin A is 20,000 or more and 80,000 or less. A weight-average molecular weight of 20,000 or more can provide an image with excellent friction resistance and 80,000 or less can provide excellent maintainability of an ink. The weight average molecular weight of water soluble resin A is more preferably 25,000 or more and 70,000 or less.

<Monomer composition of water soluble resin A>

Water soluble resin A used in the present invention is a copolymer resin synthesized from a monomer composition containing at least methyl methacrylate, alkyl acrylate or alkyl methacrylate and an acid monomer as monomers. Furthermore, the total mass of methyl methacrylate, alkyl acrylate and alkyl methacrylate is 80% or more and 95% or less based on the total monomer mass making up the copolymer resin.

The binder resin may be added before dispersing a coloring material (e.g., pigment) or may be added after dispersion, and addition after dispersion is preferable.

The binder resin is preferably added to the ink in the range of 1 wt% to 15 wt% or more preferably in the range of 3 wt% to 10 wt%.

The whole or part of the acid component contained in the binder resin can be neutralized with a base for use. As the base for neutralization, a base containing alkaline metal (e.g., NaOH, KOH), amines (e.g., alkanolamine, alkylamine), ammonia or the like can be used.

The amount of the base for neutralization varies depending on the amount of an acid monomer contained in the binder resin. A too small amount of the base is not effective for neutralizing the binder resin. A too large amount of the base causes disadvantages, such as a reduction in water resistance, discoloration, and odor of an image. Accordingly, the amount of the base for neutralization is preferably 0.2 wt% or more and 2.0 wt% or less of the total mass of the binder resin.

(Coloring material)

The ink used in the present invention contains a coloring material together with water, a binder resin and β-alkoxypropionamides represented by general formula (1) as a water soluble organic solvent.

Examples of the applicable coloring material include water soluble dye such as acid dye, direct dye, basic dye, various pigments, disperse dye including colored polymer/wax, and oil soluble dye, but use of pigment is preferable from the viewpoint of image durability.

As pigments applicable to the present invention, conventionally known organic pigments and inorganic pigments can be used. Examples thereof include azo pigments such as an azo lake, an insoluble azo pigment, a condensed azo pigment, a chelate azo pigment, polycyclic pigments such as a phthalocyanine pigment, a perylene and a perylene pigment, an anthraquinone pigment, a quinacridone pigment, a dioxazine pigment, a thioindigo pigment, an isoindolinone pigment and a quinophthalone pigment, dye lakes such as a basic dye type lake and an acid dye type lake, organic pigments such as a nitro pigment, a nitroso pigment, an aniline black and a daylight fluorescent pigment, and inorganic pigments such as carbon black and titanium oxide.

Specific examples of the preferred organic pigments are given below.

Examples of the pigment for magenta, red, or violet include C.I. Pigment Red 2, C.I. Pigment Red 3, C.I. Pigment Red 5, C.I. Pigment Red 6, C.I. Pigment Red 7, C.I. Pigment Red 8, C.I. Pigment Red 12, C.I. Pigment Red 15, C.I. Pigment Red 16, C.I. Pigment Red 17, C.I. Pigment Red 22, C.I. Pigment Red 23, C.I. Pigment Red 41, C.I. Pigment Red 48:1, C.I. Pigment Red 53:1, C.I. Pigment Red 57:1, C.I. Pigment Red 112, C.I. Pigment Red 114, C.I. Pigment Red 122, C.I. Pigment Red 123, C.I. Pigment Red 139, C.I. Pigment Red 144, C.I. Pigment Red 146, C.I. Pigment Red 148, C.I. Pigment Red 149, C.I. Pigment Red 150, C.I. Pigment Red 166, C.I. Pigment Red 170, C.I. Pigment Red 177, C.I. Pigment Red 178, C.I. Pigment Red 202, C.I. Pigment Red 220, C.I. Pigment Red 222, C.I. Pigment Red 238, C.I. Pigment Red 245, C.I. Pigment Red 258, C.I. Pigment Red 282, C.I. Pigment Violet 19, and C.I. Pigment Violet 23.

Examples of the pigment for orange, yellow, or brown include C.I. Pigment Orange 13, C.I. Pigment Orange 16, C.I. Pigment Orange 31, C.I. Pigment Orange 34, C.I. Pigment Orange 43, C.I. Pigment Yellow 1, C.I. Pigment Yellow 3, C.I. Pigment Yellow 12, C.I. Pigment Yellow 13, C.I. Pigment Yellow 14, C.I. Pigment Yellow 15, C.I. Pigment Yellow 16, C.I. Pigment Yellow 17, C.I. Pigment Yellow 43, C.I. Pigment Yellow 55, C.I. Pigment Yellow 74, C.I. Pigment Yellow 81, C.I. Pigment Yellow 83, C.I. Pigment Yellow 93, C.I. Pigment Yellow 94, C.I. Pigment Yellow 109, C.I. Pigment Yellow 110, C.I. Pigment Yellow 120, C.I. Pigment Yellow 128, C.I. Pigment Yellow 129, C.I. Pigment Yellow 138, C.I. Pigment Yellow 139, C.I. Pigment Yellow 147, C.I. Pigment Yellow 150, C.I. Pigment Yellow 151, C.I. Pigment Yellow 153, C.I. Pigment Yellow 154, C.I. Pigment Yellow 155, C.I. Pigment Yellow 175, C.I. Pigment Yellow 180, C.I. Pigment Yellow 181, C.I. Pigment Yellow 185, C.I. Pigment Yellow 194, C.I. Pigment Yellow 199, C.I. Pigment Yellow 213, and C.I. Pigment Brown 22.

Examples of the pigment for green or cyan include C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:5, C.I. Pigment Blue 16, C.I. Pigment Blue 29, C.I. Pigment Blue 60, and C.I. Pigment Green 7.

Examples of the pigment for black include carbon black and C.I. Pigment Black 5 and C.I. Pigment Black 7.

Examples of the pigment for white include titanium oxide and C.I. Pigment White 6.

The pigment undergoes various treatments and is prepared in the form of a pigment dispersion that is stable in an aqueous inkj et ink.

The pigment dispersion may be present in any form that can be stably dispersed in an aqueous dispersive medium. For example, the pigment dispersion can be selected from a pigment dispersion dispersed in a high-molecular dispersing resin, a capsule pigment particle which is coated with a water insoluble resin, and a self-dispersible pigment having a modified surface and dispersible without a dispersing resin.

When the pigment dispersion dispersed by a high-molecular dispersing resin is used, a water soluble resin can be used as the resin. Preferred examples of the water soluble resin include styrene-acrylic acid-alkyl acrylate copolymers, styrene-acrylic acid copolymers, styrene-maleic acid copolymers, styrene-maleic acid-alkyl acrylate copolymers, styrene-methacrylic acid copolymers, styrene-methacrylic acid-alkyl acrylate copolymers, styrene-maleic acid half ester copolymers, vinylnaphthalene-acrylic acid copolymers, and vinylnaphthalene-maleic acid copolymers. Furthermore, these water soluble resins to which a polyethylene oxide group, a polypropylene oxide group, a cationic group or the like is further introduced are preferably used. The copolymer resin may also be used as a pigment dispersion resin.

For dispersion of pigments, various dispersion apparatuses can be used, such as a ball mill, a sand mill, an attritor, a roll mill, an agitator, a Henschel mixer, a colloid mill, an ultrasound homogenizer, a pearl mill, a wet-type jet mill and a paint shaker.

To remove a coarse-grained fraction from a pigment dispersion, it is also preferable to use a centrifuge or classify the pigment dispersion using a filter.

The pigment may be coated with a water insoluble resin and used as a capsule pigment. The water insoluble resin referred to in the present invention is a resin insoluble in weakly acidic to weakly basic water and preferably has a solubility of 2.0 wt% or less in an aqueous solution of pH 4 to 10. Preferred examples of the water insoluble resin include acrylic resins, styrene-acrylic resins, acrylonitrile-acrylic resins, vinyl acetate resins, vinyl acetate-acrylic resins, vinyl acetate-vinyl chloride resins, polyurethane resins, silicone-acrylic resins, acrylic silicone resins, polyester resins, and epoxy resins.

The dispersing resin or the water insoluble resin preferably has an average molecular weight of 3,000 to 500,000, or more preferably 7,000 to 200,000.

The dispersing resin or the water insoluble resin preferably has a Tg (glass transition temperature) of about -30°C to 100°C, more preferably about -10°C to 80°C.

When preparing the pigment dispersion, the mass ratio of a pigment to a resin for dispersing the pigment is preferably selectable from a range of 100/150 or more and 100/30 or less. In particular, a range of 100/100 or more and 100/40 or less can provide high image durability, ejection stability, and ink storage stability.

The average particle diameter of pigment particles coated with a water insoluble resin is preferably about 80 to 300 nm, from the viewpoints of ink storage stability and chromogenic characteristics.

Various methods are known for coating a pigment with a water insoluble resin. Preferably, the coating is carried out as follows: a water insoluble resin is dissolved in an organic solvent such as methyl ethyl ketone; the acidic groups in the water insoluble resin are partially or completely neutralized with a basic component; a pigment and ion-exchanged water are added thereto, followed by dispersion; subsequently, the organic solvent is removed; and water is optionally added thereto. Alternatively, the pigment may be coated with a water insoluble resin by dispersing the pigment in a polymerizable surfactant and adding a monomer thereto for polymerization.

The self-dispersible pigment may be a commercially available surface-treated pigment. Preferred examples of the self-dispersible pigment include CABO-JET200 and CABO-JET300 (manufactured by Cabot Corp.) and Bonjet CW1 (manufactured by Orient Chemical Industries Co., Ltd.).

[Surfactant]

Next, a surfactant applicable to the ink will be described. There is no particular limit to the surfactant applicable to the ink as far as it does not undermine the object and effect of the present invention. However, inclusion of a fluorine-based or silicone-based surfactant having a high ability to reduce static surface tension can improve image quality in a low-ink-absorbent recording medium.

Furthermore, an anionic surfactant having a high ability to reduce dynamic surface tension such as dioctylsulfosuccinate, or a nonionic surfactant having a relatively low molecular weight such as polyoxyethylene alkyl ether, polyoxyethylene alkyl phenyl ether, acetylene glycol, a Pluronic type surfactant and a sorbitan derivative may be preferably used. Moreover, the fluorine-based surfactant or silicone-based surfactant may also be used together with the surfactant having a high ability to reduce dynamic surface tension.

The silicone-based surfactant applicable to the ink is preferably dimethylpolysiloxane whose side chain or end is polyether modified, and preferred examples include KF-351A and KF-642 manufactured by Shin-Etsu Chemical Co., Ltd., and BYK347 and BYK348 manufactured by BYK Japan KK.

The fluorine-based surfactant applicable to the ink is one with some or all of hydrogen atoms combined with carbon atoms of a hydrophobic group of a normal surfactant substituted by fluorine atoms. Among them, the fluorine-based surfactant having a perfluoroalkyl group or a perfluoroalkenyl group in molecules is preferable. Preferred examples include Megafac F manufactured by DIC Corporation, Surflon manufactured by Asahi Glass Co., Ltd., Zonyls manufactured by E. I. DuPont de Nemours and Company, and Ftergent series manufactured by Neos Co., Ltd.

There are anionic, nonionic and zwitterionic fluorine-based surfactants, and all of them are preferably used. Preferred examples of the anionic fluorine-based surfactant include Ftergent 100 and 150 manufactured by Neos Co., Ltd., preferred examples of the nonionic fluorine-based surfactant include Megafac F470 manufactured by DIC Corporation and Surflon S-141 and 145 manufactured by Asahi Glass Co., Ltd. Furthermore, preferred examples of the zwitterionic fluorine-based surfactant include Surflon S-131 and 132 manufactured by Asahi Glass Co., Ltd.

The content of the surfactant is preferably 0.01 wt% or more and less than 2 wt% based on the total mass of the ink.

[Other ink additives]

In addition to those described above, the following various known additives can be selected for use as appropriate: viscosity improver, resistivity adjustor, film-former, ultraviolet rays absorbent, antioxidant, anti-fade reagent, anti-mold agent, anticorrosive, pH adjustor, according to purposes of improvement of performance such as ejection stability, print head or ink cartridge adaptability, storage stability and image preservability.

Examples of the additives include oil droplet particles such as liquid paraffin, dioctyl phthalate, tricresyl phosphate and silicone oil, ultraviolet rays absorbent described in Japanese Patent Application Laid-Open No. 57-74193, Japanese Patent Application Laid-Open No. 57-87988 and Japanese Patent Application Laid-Open No. 62-261476, anti-fade reagent described in Japanese Patent Application Laid-Open No. 57-74192, Japanese Patent Application Laid-Open No. 57-87989, Japanese Patent Application Laid-Open No. 60-72785, Japanese Patent Application Laid-Open No. 61-146591, Japanese Patent Application Laid-Open No. 1-95091 and Japanese Patent Application Laid-Open No.

3-13376, and fluorescent brightener described in Japanese Patent Application Laid-Open No. 59-42993, Japanese Patent Application Laid-Open No. 59-52689, Japanese Patent Application Laid-Open No. 62-280069, Japanese Patent Application Laid-Open No. 61-242871 and Japanese Patent Application Laid-Open No. 4-219266.

Examples of the anticorrosive and anti-mold agent of an ink include aromatic halogen compound (e.g., Preventol CMK, manufactured by Bayer AG), methylene dithiocyanate, halogen nitrogen sulfur containing compounds, 1,2-benzisothiazolin-3-one (e.g., PROXEL GXL, manufactured by AVECIA BIOTECHNOLOGY INC.).

<Cleaning liquid>

Next, the cleaning liquid containing an organic solvent" to be supplied to the ink absorbing member of the wipe unit according to the present invention will be described.

The washing method or image forming method of the present invention supplies a cleaning liquid containing an organic solvent to the ink absorbing member of the wipe unit that wipes the nozzle surface of the inkjet head.

The cleaning liquid used in the present invention is required to be provided with a function of reliably wiping dry substances of the ink stuck to the nozzle surface by dissolving, re-dispersing or softening them. Therefore, the cleaning liquid preferably contains various solvents, water and basic compounds, but the cleaning liquid is not limited to them. In particular, when the cleaning liquid contains a solvent having low surface tension, the cleaning liquid can more easily permeate into the ink, which is effective. Furthermore, inclusion of the basic compound is preferable because it promotes re-dissolution or re-dispersion of resins containing an acidic component contained in the ink.

Examples of solvents having low surface tension include alkylene glycol monoalkyl ether and 1,2-alkanediols.

The basic compound refers to a substance whose pH exceeds 7.0 when the basic compound is dissolved into water at a concentration of 0.1 mol/L. Regarding the pH measuring method, a pH value at 25°C is measured using, for example, a digital pH meter HM-30S manufactured by TOA Electronics Ltd.

The basic compound may be composed of an inorganic compound or an organic compound, but use of one composed of an organic compound is more preferable. As the basic compound composed of an inorganic compound, a hydride such as ammonia, lithium hydroxide, sodium hydroxide and potassium hydroxide, a carbonate such as potassium carbonate and sodium carbonate or a bicarbonate such as potassium bicarbonate and sodium bicarbonate can be used. As the basic compound composed of an organic compound, alkanolamines or alkylamines can be used. Among them, ammonia, N,N-dimethylaminoethanol, N,N-dibutylaminoethanol, N-methyl-diethanolamine, 2-amino-2-methylpropanol and N,N-diethylaminoethanol can be preferably used.

The cleaning liquid may also contain organic solvents or polymer compounds other than those described above. A high boiling point organic solvent or a highly hydrophilic polymer compound has an effect of preventing the cleaning liquid from drying. Examples of the high boiling point organic solvent include ethylene glycol, diethylene glycol, propylene glycol, triethylene glycol, glycerin and 2-pyrrolidinone. Examples of the hydrophilic polymer compound include polyethylene glycol, and a hydrophilic polymer compound which is liquid at room temperature and has a low molecular weight is preferable.

The cleaning liquid may contain a surfactant. Examples of the surfactant include polyoxyethylene alkyl ether, polyoxyethylene alkyl phenyl ether, acetylene glycol and a Pluronic type surfactant. In addition, an additive such as anti-mold agent or anticorrosive may be added to the cleaning liquid as required.

« Recording medium»

The recording medium applicable to the method for forming an inkjet image using an inkjet ink of the present invention may be a recording medium having high ink absorption performance such as normal paper, coated paper, inkjet paper, fabric, but a recording medium with low ink absorption performance or a nonabsorbent recording medium with no ink absorbing performance may also be used. Advantageous effects of the present invention can be exerted even using a nonabsorbent recording medium, and a recording medium made of polyvinyl chloride is particularly effective.

The nonabsorbent recording medium refers to a recording medium whose surface is made up of a resin component, more specifically, a resin plate such as polystyrene, acrylonitrile-butadiene-styrene copolymer (ABS resin), a plastic film such as vinyl chloride, polyethylene terephthalate (PET) or these plastic films pasted to the surface of a base material such as paper. These recording surfaces hardly allow water to permeate. A recording medium or coated paper whose surface is made up of a resin component has poor ink absorbency and has low surface energy. Thus, when printing is performed using a water-based inkjet ink, the ink is not absorbed, the ink is repelled, the image is distorted, the ink has poor drying property and poor adhesiveness, resulting in poor image durability. Using the inkjet ink of the present invention makes it possible to obtain an image with excellent image uniformity, white streak resistance, glossiness and friction resistance even using these nonabsorbent recording media.

<Nonabsorbent recording medium>

The nonabsorbent recording medium applicable to the present invention will be described further.

Examples of the nonabsorbent recording medium include a polymer sheet, a board (soft polyvinyl chloride, rigid polyvinyl chloride, acrylic plate, polyolefin-based or the like), a synthetic paper, and when the recording medium is made of polyvinyl chloride, the effects of the present invention is particularly effectively exerted.

Specific examples of polyvinyl chloride recording medium include SOL-371G, SOL-373M, and SOL-4701 (manufactured by VIGteQnos Corp.), Glossy Polyvinyl Chloride (manufactured by System Graphy Co., Ltd.), KSM-VS, KSM-VST, and KSM-VT (manufactured by Kimoto Co., Ltd.), J-CAL-HGX, J-CAL-YHG, and J-CAL-WWWG (manufactured by Kyosho Co., Ltd.), BUS MARK V400 F vinyl and LITEcal V-600F vinyl (manufactured by Flexcon Co., Ltd.), FR2 (manufactured by Hanwha Chemical Co.) LLBAU13713 and LLSP20133 (manufactured by Sakurai Co., Ltd.), P-370B and P-400M (manufactured by Kanbo Pras Corp.), S02P, S12P, S13P, S14P, S22P, S24P, S34P, and S27P (manufactured by Grafityp Co., Ltd.), P-223RW, P-224RW, P-249ZW, and P-284ZC (manufactured by Lintec Corp.), LKG-19, LPA-70, LPE-248, LPM-45, LTG-11, and LTG-21 (manufactured by Shinseisha Co., Ltd.), MPI3023 (manufactured by Toyo Corp.), Napoleon Gloss Glossy Polyvinyl Chloride (manufactured by Niki Inc.), JV-610 and Y-114 (manufactured by IKC Co., Ltd.), NIJ-CAPVC and NIJ-SPVCGT (manufactured by Nitie Corp.), 3101/H12/P4, 3104/H12/P4, 3104/H12/P4S, 9800/H12/P4, 3100/H12/R2, 3101/H12/R2, 3104/H12/R2, 1445/H14/P3, and 1438/One Way Vision (manufactured by Intercoat Co.), JT5129PM, JT5728P, JT5822P, JT5829P, JT5829R, JT5829PM, JT5829RM, and JT5929PM (manufactured by Mactac AG), MPI1005, MPI1900, MPI2000, MPI2001, MPI2002, MPI3000, MPI3021, MPI3500, and MPI3501 (manufactured by Avery Corp.), AM-101G and AM-501G (manufactured by Gin-Ichi Corp.), FR2 (manufactured by Hanwha Japan Co., Ltd.), AY-15P, AY-60P, AY-80P, DBSP137GGH, and DBSP137GGL (manufactured by Insight Co.), SJT-V200F and SJT-V400F-1 (manufactured by Hiraoka & Co., Ltd.), SPS-98, SPSM-98, SPSH-98, SVGL-137, SVGS-137, MD3-200, MD3-301M, MD5-100, MD5-101M, and MD5-105 (manufactured by Metamark UK Ltd.), 640M, 641G, 641M, 3105M, 3105SG, 3162G, 3164G, 3164M, 3164XG, 3164XM, 3165G, 3165SG, 3165M, 3169M, 3451SG, 3551G, 3551M, 3631, 3641M, 3651G, 3651M, 3651SG, 3951G, and 3641M (manufactured by Orafol Europe GmbH), SVTL-HQ130 (manufactured by Lami Corporation Inc.), SP300 GWF and SPCLEARAD vinyl (manufactured by Catalina Co.), RM-SJR (manufactured by Ryoyoshoji Co., Ltd.), Hi Lucky and New Lucky PVC (manufactured by LG Corp.), SIY-110, SIY-310, and SIY-320 (manufactured by Sekisui Chemical Co., Ltd.), PRINT MI Frontlit and PRINT XL Light weight banner (manufactured by Endutex S.A.), RIJET 100, RIJET 145, and RIJET165 (manufactured by Ritrama S.p.A.), NM-SG and NM-SM (manufactured by Nichiei Kakoh Co., Ltd.), LTO3GS (manufactured by Rukio Co., Ltd.), Easy Print 80 and Performance Print 80 (manufactured by JetGraph Co., Ltd.), DSE 550, DSB 550, DSE 800G, DSE 802/137, V250WG, V300WG, and V350WG (manufactured by Hexis AG), and Digital White 6005PE and 6010PE (manufactured by Multifix N.V.).

<Method for forming an inkjet image>

The method for forming an inkjet image according to the present invention forms an image by ejecting the aforementioned inkjet ink containing water, a coloring material, a binder resin and β-alkoxypropionamides represented by general formula (1) onto a recording medium. Here, the inkjet printer used for the method for forming an image holds a cleaning liquid containing an organic solvent and includes a wiping mechanism that wipes the nozzle surface of the inkjet head using a wipe unit provided with an ink absorbing member that can absorb the inkjet ink.

Hereinafter, details of the inkjet printer, the wiping mechanism and the cleaning liquid supply method according to the present invention will be described.

[Overview of inkjet printer]

In the method for forming an inkjet image according to the present invention, the inkjet head for ejecting the ink to form an image may be an on-demand system or a continuous system. The ink may be ejected by any system such as an electromechanical conversion system (e.g., single cavity type, double cavity type, bender type, piston type, share mode type, or shared wall type) or an electrothermal conversion system (e.g., thermal inkjet type or Bubble Jet (registered trademark) type).

[Inkjet printer, wiping mechanism and wipe unit]

The inkjet printer used for the method for forming an inkjet image according to the present invention has an ink absorbing member that absorbs the inkjet ink and a wipe unit provided with a function of supplying a cleaning liquid containing an organic solvent. The ink absorbing member wipes the nozzle surface of the inkjet head.

Hereinafter, the inkjet printer applicable to the method for forming an inkjet image according to the present

invention, and the wiping mechanism and the wipe unit incorporated therein will be described. The present invention is not limited to the mode illustrated herein as far as the nozzle surface of the recording head is wiped using an ink absorbing member that holds a cleaning liquid containing an organic solvent and the ejection stability can be maintained.

FIG. 1 is a perspective view illustrating a schematic configuration of an inkjet printer to which the wipe unit according to the present invention is applied. In FIG. 1, platen 2 that supports recording medium P from below is horizontally arranged in inkjet printer 1. Above this platen 2, there is carriage 5 for a plurality of recording heads 4 to scan in main scanning direction B orthogonal to sub-scanning direction A which is a conveying direction of recording medium P along guide rails (not shown) that extend horizontally.

This carriage 5 is connected to a timing belt engaged between a drive pulley (not shown) and an idler pulley. The drive pulley is joined with a rotating shaft of a scanning motor. In this way, when the scanning motor is driven, carriage 5 moves in main scanning direction B.

The plurality of recording heads 4 eject inks of respective colors used for inkjet printer 1 toward recording medium P respectively. A plurality of nozzles for ejecting the inks are arranged in a row along sub-scanning direction A inside respective recording heads 4. The surface of recording head 4 facing recording medium P is a nozzle surface with these nozzles formed therein. The nozzle surface is preferably subjected to ink-repellent treatment such as fluorine treatment or silicone treatment using FEP (fluorinated ethylene propylene resin) or the like so as to prevent the ink from sticking thereto.

A plurality of ink tanks 6 that store respective inks, for example, of yellow (Y), magenta (M), cyan (C) and black (K) as the inkjet inks according to the present invention are connected to recording heads 4 via ink channels 7 that guide the inks.

Though not shown in the drawing, an ejection energy generating section such as a piezoelectric element that causes the nozzles to eject inks corresponding to respective recording heads 4 and drive circuits thereof or the like are integrally assembled in recording heads 4.

Furthermore, wipe unit 13 for use in maintenance of recording heads 4 and suction unit 14 are provided on the side of platen 2. Wipe unit 13 and suction unit 14 are adapted to move in vertical and horizontal directions in synchronization with each other.

As will be described in detail later, wipe unit 13 is provided with ink absorbing member 50 that extends upward in a convex shape and sheet-like flexible member 51 that supports ink absorbing member 50 in box-shaped casing 52. When wipe unit 13 is moved upward by a drive source such as a motor (not shown) and recording heads 4 are moved in the B direction, ink absorbing member 50 can slide on the nozzle surfaces of recording heads 4 with ink absorbing member 50 contacting the nozzle surfaces of recording heads 4. Wipe unit 13 is thus configured to be able to remove inks or a cleaning liquid or the like stuck to the entire nozzle surface. When the wiping operation ends, wipe unit 13 is lowered to isolate ink absorbing member 50 from the nozzle surface.

Furthermore, suction unit 14 that suctions the inks in the nozzles of recording heads 4 is provided with caps 15 that attach/detach to/from the nozzle surface of recording heads 4 as suction unit 14 ascends/descends. When suctioning the inks in the nozzles, cap 15 approaches the nozzle surface until it comes into close contact therewith as suction unit 14 ascends. As a result, caps 15 cover all the nozzles provided on the nozzle surface. When suctioning is completed, caps 15 detach from the nozzle surface as suction unit 14 descends.

Pump P1 for suction in a space formed between a concave portion of cap 15 and the nozzle surface when cap 15 comes into close contact with the nozzle surface is connected to caps 15 via waste liquid channels 17. Waste liquid channels 17 are formed of resin tubes, for example. In pump P1, the resin tubes making up waste liquid channels 17 are sandwiched between rollers. Pump P1 causes the rollers along the tubes to exhaust air or the like in the tubes from ends of the tubes. Such a pump is called a "tube pump."

Wipe unit 13 according to the present invention will be described in further detail using FIG. 3, FIGS. 4A and 4B.

Wipe unit 13 according to the present invention has a box-shaped casing and an opening is formed at a center of the top surface of casing 52.

FIG. 3 is a perspective view of main components of the wipe unit when pressed against the recording head. As shown in FIG. 3, feeding shaft 54 that sends ink absorbing member 50 and winding shaft 55 that winds ink absorbing member 50 are respectively arranged at opposite ends in main scanning direction B in casing 52. A motor (not shown) serving as a drive source that drives winding shaft 55 to rotate is provided below winding shaft 55.

Long sheet-like ink absorbing member 50 is wound around feeding shaft 54 in a roll form. Ink absorbing member 50 is stretched to predetermined tightness between feeding shaft 54 and winding shaft 55 and part thereof is exposed from the opening. As shown in FIG. 1, ink absorbing member 50 exposed from the opening faces the nozzle surface of recording head 4 during wiping operation. Ink absorbing member 50 is sent out from feeding shaft 54 as winding shaft 55 is driven to rotate, guided by sheet-like flexible member 51 from a side opposite to the side contacting the nozzle surface and wound by winding shaft 55.

When an ink is stuck to ink absorbing member 50 through wiping operation, ink absorbing member 50 is wound by winding shaft 55 as appropriate and an unused portion thereof is exposed from the opening. Ink absorbing member

50 may be wound by winding shaft 55 every time wiping operation of one recording head 4 is performed or ink absorbing member 50 may be wound every time wiping operation of a plurality of recording heads 4 is performed or after completing wiping operation of all recording heads 4. Reducing the number of times ink absorbing member 50 is wound can reduce consumption of ink absorbing member 50.

Ink absorbing member 50 can be removed from the inside of casing 52, and when all ink absorbing member 50 is used up (when there is no more unused portion), ink absorbing member 50 can be removed from the inside of casing 52 to be replaced by a new one.

Ink absorbing member 50 may be a cloth or sponge, for example. A cloth or sponge easily absorbs an object that comes into contact with the surface thereof, and can easily absorb and remove the ink stuck to the nozzle surface of recording head 4. The material of ink absorbing member 50 is not limited as long as it at least absorbs the ink.

The size of ink absorbing member 50 is not particularly limited, but ink absorbing member 50 preferably has at least a size enough to cover the entire nozzle surface subject to maintenance operation, that is, a width greater than the width of the nozzle surface (length in sub-scanning direction A) to uniformly perform maintenance operation such as wiping of the nozzle surface.

As shown in FIG. 3, sheet-like flexible member 51 is disposed between feeding shaft 54 and winding shaft 55 inside casing 52 for supporting ink absorbing member 50 placed in a tense state between feeding shaft 54 and winding shaft 55. Sheet-like flexible member 51 below ink absorbing member 50 faces the nozzle surface.

Opposite ends of sheet-like flexible member 51 are attached to substantially cylindrical first support member 56 and second support member 57. First support member 56 and second support member 57 support sheet-like flexible member 51 in a state in which it is bent in convex toward the nozzle surface.

First support member 56 and second support member 57 are arranged at opposite ends in a direction orthogonal to the extending direction of the convex portion of the sheet-like flexible member (sub-scanning direction A). Furthermore, first support member 56 and second support member 57 are attached to casing 52 so as to be rotatable around the axis along the extending direction of the convex portion (sub-scanning direction A) by a drive source such as a motor (not shown).

FIGS. 4A and 4B illustrate the sheet-like flexible member in a fixed state; FIG. 4A is a cross-sectional view when a pressing force is weak and FIG. 4B is a cross-sectional view when a pressing force is strong.

First support member 56 and second support member 57 are provided with fixing portions (support positions) that fix ends of sheet-like flexible member 51 in flat areas of part of the outer peripheral surface thereof. Fixing holes are formed in the fixing portions. As shown in FIGS. 4A and 4B, screws 58 and 59 are inserted into the fixing holes to screw the ends of sheet-like flexible member 51. In this way, opposite ends of sheet-like flexible member 51 are fixed to the fixing portions of first support member 56 and second support member 57.

Note that the shape, the locations and the number of the support members are not particularly limited. The configuration in which sheet-like flexible member 51 is fixed to the support members is not limited to the one illustrated here, but other configurations can also be applied.

During wiping operation, sheet-like flexible member 51 presses ink absorbing member 50 from a side opposite to the side contacting the nozzle surface so as to come into contact with the nozzle surface. The width of sheet-like flexible member 51 is greater than the width of the nozzle surface of recording head 4 (width in sub-scanning direction A) which is the region subject to the wiping operation.

The surface on which sheet-like flexible member 51 contacts ink absorbing member 50 is a curved surface. The shape of sheet-like flexible member 51 is not particularly limited as long as it is convex toward the nozzle surface, but it is preferably fixed onto the surface of contact with ink absorbing member 50 so as to be substantially curved.

Sheet-like flexible member 51 may be formed of a flexible rubber sheet, a metal sheet or a resin sheet.

(Method of supplying cleaning liquid to wipe unit)

Next, the method of supplying a cleaning liquid to the wipe unit according to the present invention will be described. According to the method of supplying a cleaning liquid to the wipe unit of the present invention, the ink absorbing member that absorbs an inkjet ink can hold a cleaning liquid containing an organic solvent.

FIG. 2 is a perspective view illustrating the method of supplying a cleaning liquid to the wipe unit.

Cleaning liquid tank 3 that can store the cleaning liquid, liquid feeding channel 11 that communicates cleaning liquid tank 3 and the portion of supplying the cleaning liquid to the wipe unit, and a cleaning liquid supply valve (not shown) disposed in the middle of liquid feeding channel 11 are provided on the side of platen 2 shown in FIG. 1.

Liquid feeding channel 11 that supplies the cleaning liquid to ink absorbing member 50 and cleaning liquid supply valve V3 disposed in the middle of liquid feeding channel 11 are provided between cleaning liquid tank 3 and wipe unit 13. Cleaning liquid supply valve V3 and an air leakage valve (not shown) are made up of valves that can electrically control their opening/closing states, for example, electromagnetic valves.

Liquid feeding channel 11 is a channel through which the cleaning liquid flows according to the operation of cleaning liquid supply valve V3 and is made up of, for example, a resin tube.

Cleaning liquid tank 3 is located higher than wipe unit 13 (ink absorbing member 50) and caps 15, and can

thereby easily supply the cleaning liquid to ink absorbing member 50 due to a hydraulic head.

Cleaning liquid supply valve V3 controls a communication status of liquid feeding channel 11. That is, when cleaning liquid supply valve V3 is open, the interior of cleaning liquid tank 3 communicates with ink absorbing member 50 of wipe unit 13 via liquid feeding channel 11. Therefore, when cleaning liquid supply valve V3 is opened as appropriate, the cleaning liquid is supplied to ink absorbing member 50. On the other hand, when cleaning liquid supply valve V3 is closed, liquid feeding channel 11 is shut off at the position of cleaning liquid supply valve V3. For this reason, communication between the interior of cleaning liquid tank 3 and ink absorbing member 50 is also shut off.

Cleaning liquid tank 3, liquid feeding channel 11 and cleaning liquid supply valve V3 function as a cleaning liquid supply section. To be more specific, as shown in FIG. 2, cleaning liquid nozzle 53 is provided at a distal end on the ink absorbing member 50 side of liquid feeding channel 11 and liquid feeding channel 11 in the vicinity of cleaning liquid nozzle 53 is configured to be movable to and fro in an arrowed direction by a drive source (not shown) (in sub-scanning direction A).

When the cleaning liquid is not supplied to ink absorbing member 50, cleaning liquid nozzle 53 is moved from a position above ink absorbing member 50 to the outside (rightward direction in FIG. 2). On the other hand, when cleaning liquid is supplied to ink absorbing member 50, cleaning liquid nozzle 53 is moved to one end of ink absorbing member 50 (left end of ink absorbing member 50 in FIG. 2) and aligned. Cleaning liquid supply valve V3 is opened and cleaning liquid nozzle 53 is then moved to the other end of ink absorbing member 50 (right end of ink absorbing member 50 in FIG. 2) while dripping the cleaning liquid from cleaning liquid nozzle 53. In this way, the cleaning liquid can be supplied over the entire surface of ink absorbing member 50 along sub-scanning direction A.

[Image formation: heat treatment]

In order to form a high quality image with high image durability as well as realize high-speed printing, the method for forming an inkjet ink image according to the present invention preferably heats the recording side of a recording medium for recording. Preheating the recording medium for printing improves a drying property and a bodying speed after adding the ink to the recording medium, prevents ink smudge, and can thereby obtain high image quality. In addition, β-alkoxypropionamides represented by general formula (1) contained in the inkjet ink dissolve or swell a resin component making up the surface of the recording medium, and a coloring material and other ink solvents enter therein and unite with the recording medium. This makes it easier to obtain image durability of the image formed.

The heating temperature is preferably set such that the surface temperature on the recording side is 35°C or higher and 90°C or lower. Adjusting the temperature on the recording side of the recording medium to 35°C or higher and 90°C or lower makes it easier to obtain high image quality and sufficient image durability. It is also possible to further shorten the drying time and perform printing stably without significantly affecting ink ejectability. The recording side of the recording medium is more preferably heated to a temperature of 40°C or higher and 60°C or lower.

The heating method may be selectable from a contact-type method whereby a heat-generating heater is incorporated in the recording medium conveying system or platen member and heating is performed from below the recording medium and a contactless method whereby heating is performed from below or above using radiant heat from a lamp or the like.

If necessary, after providing the ink to the recording medium, a drying step may be provided to remove unnecessary organic solvents or the like. A section that dries the ink is not particularly limited, but may be selected from a method whereby the reverse side of the recording medium is made to contact a heating roller or flat heater to dry the ink, a section that blows hot air over the printing surface using a dryer or the like or a method whereby a volatile component is removed through decompression processing, or these may be used in combination as appropriate.

FIG. 5 is a perspective view illustrating another example of a schematic configuration of the inkjet recording apparatus and FIG. 6 is a functional block diagram illustrating a configuration of main components of the inkjet recording apparatus shown in FIG. 5.

As shown in FIG. 5 and FIG. 6, inkjet recording apparatus 100 is provided with conveying section 111 that conveys sheet-like recording medium S in predetermined conveying direction Y, recording heads 102 that eject an ink to recording medium S conveyed by conveying section 111, carriage 103 on which recording heads 102 are mounted, platen 104 arranged on the ink ejecting section 121 side of recording heads 102, ink supply section 105 that supplies the ink to recording heads 102, maintenance units 161 and 162 that perform maintenance of recording heads 102, power supply section 107, timing section 108 and control section 109 that controls the respective sections.

Conveying section 111 is provided with a conveying roller, conveying motor 112 (see FIG. 6) or the like. Conveying motor 112 is configured to be driven under the control of CPU 191 (see FIG. 6) of control section 109 to rotate the conveying roller in a predetermined direction and thereby convey recording medium S in conveying direction Y. Furthermore, during recording operation, conveying section 111 repeats conveyance and stop of recording medium S according to the operation of carriage 103 to intermittently convey recording medium S.

Carriage 103 is mounted with recording heads 102 and is freely movable in main scanning direction X between

maintenance region A1 in which maintenance units 161 and 162 are provided and recording region A2 in which platen 104 is provided while being guided by a guide member (not shown) that extends in main scanning direction X substantially orthogonal to conveying direction Y of recording medium S. That is, carriage 103 moves within a range between maintenance region A1 and recording region A2.

Furthermore, the moving direction of carriage 103 is changed according to the rotating direction of carriage drive motor (drive section) 131. Thus, carriage 103 moves to and fro in main scanning direction X. Furthermore, during recording operation, carriage 103 moves forward, backward or to and fro in main scanning direction X while recording medium S is stopped. At this time, recording heads 102 record an image or character into recording medium S.

Furthermore, platen 104 is provided below carriage 103. Platen 104 is arranged to be substantially horizontal, for example, and the undersurface (surface opposite to the recording side) of recording medium S in a predetermined range is suctioned by driving a suctioning section (not shown) and supported with the top surface of platen 104. Furthermore, heater 141 that heats recording medium S conveyed by conveying section 111 is arranged inside platen 104. This heater 141 is driven under the control of CPU 191 of control section 109 to make a heating temperature variable according to the amount of power applied from power supply section 107. Heater 141 may be provided not only inside platen 104 but also inside the conveying roller of conveying section 111, for example.

A predetermined number of recording heads 102 corresponding to inks of colors used for inkjet recording apparatus 100 are provided. For example, four recording heads 102 are provided for four ink colors: black (K), yellow (Y), magenta (M) and cyan (C), and four recording heads 102 are arranged side by side in main scanning direction X. Furthermore, recording heads 102 are arranged such that their undersurfaces face the recording side (top surface) of recording medium S conveyed on platen 104 during recording operation. Furthermore, ink ejecting section 121 is provided on the undersurface of recording head 102, in which ejection ports of a plurality of nozzles are arranged along a direction substantially orthogonal to main scanning direction X (direction substantially parallel to conveying direction Y) (see FIG. 7A or the like). Ink ejecting section 121 is configured with a nozzle plate (not shown) in which a plurality of nozzle holes are formed by being arranged on the bottom surface of the body of recording head 102.

Furthermore, recording head 102 incorporates an ejecting section (not shown) such as a piezoelectric element, and an ink droplet is ejected individually from each ejection port through operation of the ejecting section.

The ink used for inkjet recording apparatus 100 is not limited, and other colors such as light yellow (LY), light magenta (LM) and light cyan (LC) can also be used. In this case, recording head 102 corresponding to each color is mounted on carriage 103. A heater (not shown) for heating the ink may be incorporated in each recording head 102.

Inks are supplied to recording head 102 from ink supply section 105 for respective colors (e.g., black (K), yellow (Y), magenta (M) and cyan (C)) used for inkjet recording apparatus 100.

Ink supply section 105 is configured so as to supply inks of the respective colors from a predetermined number of ink tanks 151 that store the respective inks to respective recording heads 102 via ink channels 152 such as ink supply tubes. Furthermore, subtanks 153 and dampers 154 that temporarily store the inks stored in ink tanks 151 are arranged in the middle of ink channels 152. The configuration of ink supply section 105 is shown as an example, and is not limited to this but may be changed arbitrarily as appropriate.

Maintenance units 161 and 162 in FIG. 5 are arranged in maintenance region A1 adjacent to recording region A2 along main scanning direction X which is the moving direction of carriage 103. Furthermore, maintenance units 161 and 162 are provided with suction apparatus 161 that suctions the inks in the nozzles of recording heads 102 and wiping apparatus 162 that wipes ink ejecting sections 121.

Suction apparatus 161 includes a predetermined number of (e.g., 4) suction caps 611 provided for respective recording heads 102 and suction pump 612 that communicates with respective suction caps 611. Each suction cap 611 covers the nozzle surface (undersurface) on which a plurality of nozzle holes of ink ejecting section 121 are formed and activates suction pump 612 under the control of CPU 191 of control section 109. The ink inside recording head 102 and a foreign substance are thereby suctioned together via the ejection port of the nozzle. Suction pump 612 communicates with a waste liquid tank (not shown) and the ink and foreign substance suctioned via suction cap 611 are sent to the waste liquid tank.

Hereinafter, wiping apparatus 162 will be described with reference to FIG. 7A and FIG. 7B. FIG. 7A and FIG. 7B are diagrams illustrating the location of wiping apparatus 162 with respect to recording head 102 and show recording medium S viewed from downstream of conveying direction Y. Furthermore, FIG. 7A shows a state in which wiping apparatus 162 has ascended and FIG. 7B shows a state in which wiping apparatus 162 has descended. An initial state is a state in which wiping apparatus 162 has descended and cleaning roller 621 is detached from recording head 102 (see FIG. 7B), that is, cleaning roller 621 is not in contact with recording head 102.

Wiping apparatus 162 wipes ink ejecting section 121 of recording head 102 with an outer peripheral surface of substantially cylindrical cleaning roller 621. To be more specific, wiping apparatus 162 is provided with cleaning roller 621, squeezing roller 622 that comes into contact with cleaning roller 621 to adjust the amount of impregnation of a washing liquid by wiping member 621b of cleaning roller 621, inner container 623 that contains a predetermined washing liquid, outer container 624 that receives a used washing liquid overflowing from inner container 623 as the container is

refilled with the washing liquid, support plate 625 that supports a support mechanism (not shown) that supports inner container 623, outer container 624 and cleaning roller 621, and vertical movement mechanism 626 that moves support plate 625 in the vertical direction.

Cleaning roller 621 includes roller shaft (rotating shaft) 621a and substantially cylindrical wiping member 621b mounted coaxially with roller shaft 621 a. Roller shaft 621 a and wiping member 621b extend in a direction substantially orthogonal to the moving direction (main scanning direction X) of carriage 103.

The length of wiping member 621b in the axial direction (longitudinal direction) is substantially equal to or greater than the length in the longitudinal direction substantially parallel to conveying direction Y of ink ejecting section 121 of recording head 102. Furthermore, wiping member 621b may also be configured to be detachable from roller shaft 621a, and this may facilitate replacement of consumed wiping member 621b.

Wiping member 621b is made up of a sponge-like flexible porous material, for example. Examples of the porous material include a porous material having open cell made up of plastic polymers or the like. Furthermore, the porous material preferably has an average porosity of 60% or more, an average pore diameter of 700 μm or less measured by a porosimeter from the viewpoint of performing satisfactory cleaning.

Here, the volume of a specimen (real volume) is determined from Boyle's gas law (air pressure change), which is one of gas substitution methods, and the average porosity can be calculated from the ratio of the real volume to an apparent volume of this specimen. To be more specific, the real volume is measured using Micromeritics Tex Accu Picks 1330 and the average porosity is calculated from the following equation: average porosity={(apparent volume)·(real volume)}/(apparent volume)×100(%)

Furthermore, the average pore diameter can also be calculated by measuring a predetermined number (e.g., 5 to 10) of pores confirmed from an electron micrograph of the specimen by adopting an average value measured using a measure printed in the photograph.

Roller shaft 621a is rotatably supported by a support mechanism (not shown). Furthermore, a power transmission mechanism (e.g., gears, (not shown)) that transmits a drive force of roller drive motor (drive section) 621c is connected to roller shaft 621a. Driving roller drive motor 621c under the control of CPU 191 of control section 109 causes roller shaft 621a to rotate in a predetermined direction (e.g., counterclockwise in FIG. 7A).

Furthermore, cleaning roller 621 is positioned in the vertical direction by vertical movement mechanism 626 such that the top surface of wiping member 621b is pressed against at least ink ejecting section 121 of recording head 102 (see FIG. 7A). In this way, cleaning roller 621 causes wiping member 621b to contact ink ejecting section 121 of recording head 102 to wipe ink ejecting section 121. That is, the portion of wiping member 621b that contacts ink ejecting section 121 constitutes a wiping section.

The degree to which the top surface of wiping member 621b is made to contact ink ejecting section 121 of recording head 102 can be arbitrarily changed according to the degree of wiping of ink ejecting section 121 and the thickness in the diameter direction of wiping member 621b. For example, wiping member 621b is made to excessively ascend to a position higher than the position at which the top surface of wiping member 621b comes into contact with the surface of ink ejecting section 121 of recording head 102. The amount of extra ascent is preferably half or less of the thickness (A) of wiping member 621b (preferably 25% or less). To be more specific, the amount of extra ascent is preferably 1% or more and 25% or less, particularly 4% or more and 15% or less of the thickness of wiping member 621b from the relationship with the amount of encroachment of squeezing roller 622 which will be described later.

Part of wiping member 621b of cleaning roller 621 is immersed in a washing liquid stored in inner container 623. Inner container 623 is formed, for example, into a box shape whose top surface is open. The washing liquid is supplied from washing cleaning liquid storage section (liquid supply section) 627 (see FIG. 5) to inner container 623 via supply port 623a formed on one side thereof. The washing liquid is supplied from washing liquid storage section 627 by operating a supply pump (not shown) at predetermined timing for a predetermined time under the control of CPU 191 of control section 109 (details will be described later). Outer container 624 that contains inner container 623 is provided outside inner container 623.

Outer container 624 is designed to receive the washing liquid overflowing from the top brim of inner container 623 as the container is refilled with the washing liquid and exhaust the washing liquid suctioned through operation of suction pump 612 to the waste liquid tank via exhaust port 624a.

Outer container 624 is configured to receive the washing liquid overflowing from the top brim of inner container 623, but the configuration is not limited to this, and, for example, inner container 623 may have an exhaust port (not shown) which can be freely opened/closed by a valve at the bottom. This allows the used washing liquid to be exhausted together with dirt deposited at the bottom of inner container 623.

Squeezing roller 622 that presses wiping member 621b in the radius direction is provided downstream in the rotating direction of wiping member 621b. Squeezing roller 622 is made of a material harder than wiping member 621b, for example, rigid rubber or stainless steel. Furthermore, the diameter of squeezing roller 622 is smaller than the diameter of cleaning roller 621. Squeezing roller 622 is rotatably supported by one end of support arm 622a.

Support arm 622a is a long member in a predetermined direction, and a long hole 622b is formed in the middle.

Pin 625a provided in support plate 625 is inserted in long hole 622b, which allows support arm 622a to slide along long hole 622b.

The other end of support arm 622a where squeezing roller 622 is not located is connected to a squeezing amount adjusting mechanism (not shown). The squeezing amount adjusting mechanism is driven under the control of CPU 191 of control section 109. In this way, squeezing roller 622 moves in a predetermined direction (e.g., horizontal direction in FIG. 7A). Accordingly, support arm 622a shakes in a predetermined direction. The amount of encroachment (amount of pressing) of squeezing roller 622 supported at one end of support arm 622a into wiping member 621b is adjusted by the amount of shaking of support arm 622a.

The amount of encroachment can be arbitrarily changed according to the amount of the washing liquid to be contained in wiping member 621b or the like. The amount of squeezing of the washing liquid is thereby optimized. For example, the amount of encroachment may be in the range of 5% to 30% of the thickness of wiping member 621b of 1 mm to 6 mm or 20% of the thickness of wiping member 621b of 3 mm to 5 mm.

The configuration of the mechanism of squeezing the washing liquid from wiping member 621b is not limited to the aspect described above. For example, a spatula-shaped squeezing plate may be used instead of squeezing roller 622.

Part of the washing liquid absorbed by wiping member 621b is squeezed by a pressing force of squeezing roller 622. Accordingly, the ink ejecting section 121 of recording head 102 can be wiped with wiping member 621b impregnated with an optimum amount of the washing liquid.

Wiping member 621b that has absorbed condensation C (see FIG. 9B or the like) by wiping ink ejecting section 121 is immersed in the washing liquid, and can thereby be deprived of water content or dirt, and can further absorb the washing liquid. The wiping member 621b is squeezed by a predetermined amount by squeezing roller 622 and wipes ink ejecting section 121 again. Washing of ink ejecting section 121 of recording head 102 is performed by repeating the above cycle consecutively for a predetermined time.

Support plate 625 is provided below outer container 624. The height of support plate 625 can be adjusted in the vertical direction using a pair of cams 626a and 626a that constitute vertical movement mechanism 626 (see FIG. 7A and FIG. 7B). To be more specific, the pair of cams 626a and 626a are arranged at decentered positions of the rotating shafts and rotation thereof changes the position of support plate 625 which is in contact with cams 626a. This causes wiping apparatus 162 as a whole to move in the vertical direction.

That is, when ink ejecting section 121 of recording head 102 is not wiped, support plate 625 descends as shown in FIG. 7B and cleaning roller 621 is detached from recording head 102. When ink ejecting section 121 of recording head 102 is wiped or cleaning roller 621 is rotated, the pair of cams 626a and 626a rotate in synchronization with each other by a predetermined angle (e.g., 180°) in a predetermined direction from the state in FIG. 7B, and support plate 625 thereby ascends and cleaning roller 621 approaches recording head 102 (see FIG. 7A).

Note that when ink ejecting section 121 of recording head 102 is not wiped and cleaning roller 621 does not rotate (see FIG. 7B), the squeezing amount adjusting mechanism may be driven under the control of CPU 191 of control section 109. The squeezing amount adjusting mechanism shakes support arm 622a using the engagement between pin 625a and the long hole to release the pressing force of wiping member 621b by squeezing roller 622. This makes it possible to avoid deformation of wiping member 621b by a useless pressing force from squeezing roller 622.

Furthermore, the pair of cams 626a and 626a may be rotated using a drive source which is common to the drive source (roller drive motor 621c) of cleaning roller 621. The cleaning roller 621 is driven through rotation in a predetermined direction, and the pair of cams 626a and 626a are rotated in the other direction by interposing a clutch mechanism in between.

Maintenance units 161 and 162 may be provided with an ink receiver (not shown) that receives an ink ejected without any load from each recording head 102.

Power supply section 107 is provided with normal power supply section 171 and standby power supply section 172. Normal power supply section 171 supplies power to members constituting the apparatus body such as conveying section 111, recording heads 102, carriage 103, platen 104, ink supply section 105, maintenance units 161 and 162, timing section 108 and control section 109 while main functions of the apparatus are being executed (recording using recording heads 102 or the like).

Standby power supply section 172 supplies power to only some of the members constituting the apparatus body (wiping apparatus 162 of maintenance units 161 and 162, timing section 108, control section 109) during a standby state in which main functions of the apparatus are not being executed, for example, after completion of recording operation using recording heads 102. By limiting power supplied to minimum power necessary to operate wiping apparatus 162 in a standby state, timing section 108 and control section 109, it is possible to realize power saving.

Timing section 108 is provided with a timer and a timing circuit (not shown) or the like to measure the time that has elapsed after recording operation. To be more specific, timing section 108 measures the time that has elapsed after completing recording operation and shifting to a standby state and outputs the measurement result to CPU 191 of control section 109.

Control section 109 controls the respective sections of inkjet recording apparatus 100. As shown in FIG. 6, control section 109 is provided with CPU 191, RAM 192 and ROM 193 or the like. CPU (central processing unit) 91 reads various application programs relating to various functions stored in ROM 193 as inkjet recording apparatus 100, deploys them in a work area in RAM 192 and exercises control over inkjet recording apparatus 100 according to the programs.

RAM (random access memory) 192 is provided with a program storage region for deploying, for example, a processing program to be executed by CPU 191 and a data storage region that stores processing results generated when input data or the above processing program is executed.

ROM (read only memory) 193 is constructed, for example, of a hard disk drive. ROM 193 stores a system program executable by inkjet recording apparatus 100, various processing programs executable by the system program, and data or the like used when executing the various processing programs. To be more specific, ROM 193 stores wiping control program 193a, standby control program 193b or the like. Wiping control program 193a is a program executed by CPU 191 when a wiping mode is set in which ink ejecting section 121 is wiped with an outer peripheral surface of cleaning roller 621 after recording operation using recording head 102.

The recording operation using recording head 102 refers to operation that performs recording by ejecting an ink to a predetermined number of (e.g., about 5) recording media S while scanning recording head 102 and operation that performs recording by ejecting an ink to each recording medium S while scanning recording head 102 for a period from certain timing (e.g., point in time at which the first wiping operation is completed) until the maintenance time.

That is, wiping control program 193a is a program for causing CPU 191 to realize a function of causing recording head 102 and wiping apparatus 162 to relatively move after suction apparatus 161 suctions an ink or a foreign substance inside each recording head 102 at predetermined timing of executing normal maintenance of recording head 102 after recording operation, wiping ink I (see FIG. 9A or the like) stuck to ink ejecting section 121 with an outer peripheral surface of cleaning roller 621, and further wiping condensation C (see FIG. 9B) generated at ink ejecting section 121 with the outer peripheral surface of cleaning roller 621.

To be more specific, when a wiping mode is selected based on a predetermined operation by a user, CPU 191 reads wiping control program 193a from ROM 193 and executes the program. That is, CPU 191 controls the drive of carriage drive motor 131 to move carriage 103 mounted with recording head 102 from recording region A2 to maintenance region A1 along main scanning direction X, and causes suction cap 611 to cover (cap) the nozzle surface of ink ejecting section 121 on which a plurality of nozzle holes are formed. Next, CPU 191 activates suction pump 612 to suction the ink in recording head 102 together with a foreign substance via the nozzle ejection port and uncap the nozzle surface.

Then, CPU 191 controls the drive of carriage drive motor 131 and causes carriage 103 mounted with recording head 102 to move so as to wipe ink I stuck to ink ejecting section 121 of recording head 102 with the outer peripheral surface of cleaning roller 621. To be more specific, carriage 103 is moved from maintenance region A1 to recording region A2 along main scanning direction X.

For wiping apparatus 162, when cleaning roller 621 is detached from recording head 102 (see FIG. 7B), CPU 191 causes the pair of cams 626a and 626a to rotate in synchronization with each other by a predetermined angle (e.g., 180°) in a predetermined direction to thereby cause support plate 625 to ascend. Thus, CPU 191 causes cleaning roller 621 to contact recording head 102 (see FIG. 7A). Next, CPU 191 controls the drive of roller drive motor 621c to rotate cleaning roller 621 in a predetermined direction (e.g., clockwise in FIG. 9A) at predetermined rotation speed R1 and causes carriage drive motor 131 to rotate in a predetermined direction (e.g., clockwise). Thus, carriage 103 mounted with recording head 102 is made to move from maintenance region A1 to recording region A2 in main scanning direction X at a predetermined moving speed. At this time, the rotating direction of cleaning roller 621 that rotates in a predetermined direction is opposite to the moving direction of recording head 102 (e.g., counterclockwise in FIG. 5A). Ink ejecting section 121 of recording head 102 that moves together with carriage 103 is wiped with the outer peripheral surface of wiping member 621b of cleaning roller 621 and ink I stuck to ink ejecting section 121 is dissolved by a washing liquid, absorbed and removed by wiping member 621b (see FIG. 9B).

While causing cleaning roller 621 to rotate in a predetermined direction (e.g., clockwise in FIG. 9A) at predetermined rotation speed R1, CPU 191 causes carriage drive motor 131 to rotate in a direction opposite to a predetermined direction (e.g., counterclockwise). Thus, carriage 103 mounted with recording head 102 is made to move from recording region A2 to the maintenance side along main scanning direction X at predetermined moving speed V2. At this time, the rotating direction of cleaning roller 621 that rotates in the predetermined direction is the same as the moving direction of recording head 102 (e.g., clockwise in FIG. 9A). Ink ejecting section 121 of recording head 102 that moves together with carriage 103 is wiped with the outer peripheral surface of wiping member 621b of cleaning roller 621 and condensation C generated at ink ejecting section 121 during recording operation is absorbed and removed by wiping member 621 b (see FIG. 9D).

Standby control program 193b is a program executed by CPU 191 while the apparatus is in a standby state after recording operation using recording head 102. That is, in a standby state after the recording operation, according to standby control program 193b, CPU 191 causes standby power supply section 172 to supply power to roller drive

motor 621c every time a predetermined time (e.g., 60 minutes or the like) elapses and causes cleaning roller 621 to make at least one rotation.

To be more specific, when a standby mode is selected based on a predetermined operation by the user, CPU 191 first reads standby control program 193b from ROM 193, executes the program and causes timing section 108 to measure an elapsed time in the standby state. CPU 191 controls the timing of supplying power from standby power supply section 172 to 621c based on the measurement result by timing section 108. That is, CPU 191 determines whether or not the predetermined time has elapsed after the shift to the standby state based on the measurement result by timing section 108. When CPU 191 determines that the predetermined time has elapsed, standby power supply section 172 supplies power to roller drive motor 621c to rotate cleaning roller 621.

For example, CPU 191 causes the pair of cams 626a and 626a to synchronize with each other and causes them to rotate by a predetermined angle (e.g., 180°) in a predetermined direction, thereby causes support plate 625 to ascend and causes wiping apparatus 162 to ascend (see FIG. 7A). Next, CPU 191 controls the drive of roller drive motor 621c and causes cleaning roller 621 to rotate in a predetermined direction at a predetermined rotation speed. At this time, CPU 191 causes cleaning roller 621 to rotate a plurality of times (e.g., 2 times) so that substantially entire cleaning roller 621 is impregnated with the washing liquid of inner container 623. That is, CPU 191 controls the drive of roller drive motor 621c to rotate cleaning roller 621 for a certain time (e.g., 10 seconds).

Thus, ink J (see FIG. 11A or the like) absorbed by wiping member 621b of cleaning roller 621 is immersed in the washing liquid of inner container 623 and thereby dissolved and removed from wiping member 621b. After being absorbed by wiping member 621b, the washing liquid is squeezed by a predetermined amount by squeezing roller 622. This cycle is repeated consecutively during the rotation of cleaning roller 621. The number of rotations of cleaning roller 621 can be arbitrarily changed as appropriate according to various conditions defining the absorption performance of cleaning roller 621, for example, wiping member 621b and the composition of the washing liquid.

After a lapse of a certain time, CPU 191 controls the drive of roller drive motor 621c so as to stop the rotation thereof and stop the rotation of cleaning roller 621.

CPU 191 may make variable the time interval at which cleaning roller 621 is made to rotate. For example, CPU 191 may specify the degree of drying (dried water content per unit time or the like) of the portion not immersed in the washing liquid of cleaning roller 621 based on the temperature outside the apparatus body, humidity and ink composition (ink concentration and water content or the like) or other conditions, and make variable the time interval at which cleaning roller 621 is made to rotate according to the degree of drying. That is, when the degree of drying of cleaning roller 621 is relatively high, the time interval at which cleaning roller 621 is made to rotate may be shortened or when the degree of drying of cleaning roller 621 is relatively low, the time interval at which cleaning roller 621 is made to rotate may be increased.

Here, a detection section that sequentially detects the temperature and humidity outside the apparatus body at predetermined timing may be provided to specify the temperature and humidity based on output data from the detection section or values inputted based on the predetermined operation by the user may be used when the apparatus shifts to a standby state.

Furthermore, CPU 191 may drive a supply pump (not shown) of washing liquid storage section 627 based on the timing result by timing section 108 to control the timing of supplying the predetermined washing liquid from washing liquid storage section 627 to inner container 623. That is, CPU 191 executes standby control program 193b and determines whether or not the time to supply the washing liquid has come based on the measurement result by timing section 108. When CPU 191 determines that the time to supply the cleaning liquid has come, the supply pump (not shown) may be driven for a predetermined time so that the predetermined washing liquid is supplied by a predetermined amount from washing liquid storage section 627 to inner container 623.

Next, operation by inkjet recording apparatus 100 for maintenance of recording head 102 will be described with reference to FIG. 8 and FIG. 9A to FIG. 9D.

<Wiping processing>

FIG. 8 is a flowchart illustrating an example of operation of wiping processing. Furthermore, FIG. 9A to FIG. 9D are diagrams schematically illustrating locations of recording head 102 and wiping apparatus 162 during wiping processing. Recording head 102 in a state in FIG. 9A moves, undergoes states in FIG. 9B and FIG. 9C and reaches a state in FIG. 9D. Furthermore, FIG. 9A to FIG. 9D represent states of recording medium S viewed from the upstream side in conveying direction Y. FIG. 9A to FIG. 9D schematically illustrate two recording heads 102 mounted on carriage 103, but the number of recording heads 102 is not limited to this.

As shown in FIG. 8, CPU 191 first reads wiping control program 193a from ROM 193 and executes the program. CPU 191 controls the drive of carriage drive motor 131 to cause carriage 103 mounted with recording head 102 to move from recording region A2 to maintenance region A1 along main scanning direction X. In this way, suction cap 611 caps the nozzle surface of ink ejecting section 121 (step S1). Next, CPU 191 activates suction pump 612 to suction the ink

inside recording head 102 and a foreign substance via the ejection port of the nozzle (step S2). Then, CPU 191 causes suction cap 611 to uncap the nozzle surface of ink ejecting section 121 (step S3).

Next, CPU 191 causes wiping apparatus 162 which has descended (see FIG. 7B) to ascend and causes cleaning roller 621 to start rotating (step S4). To be more specific, CPU 191 causes the pair of cams 626a and 626a to rotate in synchronization with each other by a predetermined angle (e.g., 180°) in a predetermined direction thereby causing support plate 625 to ascend. Then, the body of wiping apparatus 162 ascends and cleaning roller 621 approaches recording head 102 (see FIG. 7A). Furthermore, CPU 191 controls the drive of roller drive motor 621c to rotate cleaning roller 621 in a predetermined direction (e.g., clockwise in FIG. 9A). The order of the ascent of wiping apparatus 162 and the start of rotation of cleaning roller 621 is not limited to the one described above, but the order may be reversed or both may occur almost at the same time.

Next, CPU 191 controls the drive of carriage drive motor 131 to move carriage 103 mounted with recording head 102 along main scanning direction X from maintenance region A1 to recording region A2 (from right to left in FIG. 9A or the like). In this way, ink ejecting section 121 of recording head 102 is wiped with the outer peripheral surface of wiping member 621b of cleaning roller 621, ink I stuck to ink ejecting section 121 is dissolved in the washing liquid, absorbed and removed by wiping member 621b (see step S5 in FIG. 9B).

Next, CPU 191 controls the drive of carriage drive motor 131 to move carriage 103 mounted with recording head 102 along main scanning direction X from recording region A2 to maintenance region A1 (from left to right in FIG. 9C). Thus, ink ejecting section 121 of recording head 102 is wiped with the outer peripheral surface of wiping member 621b of cleaning roller 621, condensation C of ink ejecting section 121 is absorbed and removed by wiping member 621b (see step S6 in FIG. 9D).

Next, CPU 191 controls the drive of carriage drive motor 131 to move carriage 103 mounted with recording head 102 along main scanning direction X to the ink receivers of maintenance units 161 and 162. Thus, the ejecting section of each recording head 102 is activated to eject ink droplets without any load from the ejection port of the nozzle (step S7).

Next, CPU 191 stops the rotation of cleaning roller 621 and causes wiping apparatus 162 that has ascended to descend (see FIG. 7A) (step S8). To be more specific, CPU 191 stops the rotation of roller drive motor 621c and stops the rotation of cleaning roller 621. Furthermore, CPU 191 causes the pair of cams 626a and 626a to rotate by a predetermined angle (e.g., 180°) in a predetermined direction in synchronization with each other to thereby cause support plate 625 to descend. This causes the body of wiping apparatus 162 to descend to detach cleaning roller 621 from recording head 102 (see FIG. 7B). Note that the order of the stopping of rotation of cleaning roller 621 and the descent of wiping apparatus 162 is not limited and either may be the first or both may occur almost at the same time.

Next, CPU 191 controls the drive of carriage drive motor 131 to move carriage 103 mounted with recording head 102 along main scanning direction X to suction apparatus 161 in maintenance region A1. CPU 191 then causes suction cap 611 to cap the nozzle surface on which a plurality of nozzle holes of ink ejecting section 121 are formed (step S9) to end the wiping processing.

Next, the operation of inkjet recording apparatus 100 in a standby state will be described with reference to FIG. 10, and FIG. 11A and FIG. 11B.

<Standby processing>

FIG. 10 is a flowchart illustrating an example of operation of standby processing. Furthermore, FIG. 1A and FIG. 11B are diagrams schematically illustrating operation of cleaning roller 621 in standby processing. Cleaning roller 621 rotates and undergoes a change from a state shown in FIG. 11A to a state shown in FIG. 11B. FIG. 11A and FIG. 11B illustrate the state of recording medium S viewed from the upstream side in conveying direction Y.

As shown in FIG. 10, when recording operation on recording medium S ends (step S11) and the standby mode is selected based on a predetermined operation by the user, CPU 191 switches the power supply source from normal power supply section 171 to standby power supply section 172. The apparatus then shifts to the standby state in which standby power supply section 172 supplies power only to wiping apparatus 162 of maintenance units 161 and 162, timing section 108, and control section 109 (step S12).

Next, CPU 191 reads standby control program 193b from ROM 193 and executes it, controls timing section 108 to measure a time elapsed after shifting to the standby state (step S13). Next, CPU 191 determines whether or not a predetermined time has elapsed after shifting to the standby state based on the measurement result by timing section 108 (step S14). The determination as to whether or not a predetermined time has elapsed in step S 14 is repeatedly made until CPU 191 determines that a predetermined time has elapsed (step S14; YES).

When CPU 191 determines in step S14 that a predetermined time has elapsed (step S14; YES), CPU 191 causes wiping apparatus 162 that has descended (see FIG. 3B) to ascend and causes cleaning roller 621 to start rotating (step S15). To be more specific, CPU 191 causes the pair of cams 626a and 626a to rotate by a predetermined angle (e.g., 180°) in a predetermined direction in synchronization with each other, to thereby cause support plate 625 to ascend

and cause the body of wiping apparatus 162 to ascend (see FIG. 3A). Furthermore, CPU 191 controls the drive of roller drive motor 621c to cause cleaning roller 621 to rotate in a predetermined direction at a predetermined rotation speed.

CPU 191 controls the drive of roller drive motor 621c to cause cleaning roller 621 to continuously rotate for a certain time. In this way, ink J absorbed by wiping member 621b is dissolved in the washing liquid in inner container 623 and removed from wiping member 621b. Furthermore, the washing liquid is absorbed by wiping member 621b and squeezed by a predetermined amount by squeezing roller 622. This cycle is consecutively repeated during the rotation of cleaning roller 621.

After a lapse of a certain time, CPU 191 stops the rotation of cleaning roller 621 and causes wiping apparatus 162 that has ascended (see FIG. 3A) to descend (step S16). To be more specific, CPU 191 stops the rotation of roller drive motor 621c and stops the rotation of cleaning roller 621. Furthermore, CPU 191 causes the pair of cams 626a and 626a to rotate by a predetermined angle (e.g., 180°) in a predetermined direction in synchronization with each other to thereby cause support plate 625 to descend and cause the body of wiping apparatus 162 to descend (see FIG. 7B). Furthermore, CPU 191 drives the squeezing amount adjusting mechanism, shakes support arm 622a using the engagement between pin 625a and the long hole and releases the pressing of wiping member 621 b by squeezing roller 622.

The order of the stopping of rotation of cleaning roller 621 and the descent of wiping apparatus 162 is not limited, either may be the first or both may occur almost at the same time.

Then, CPU 191 determines, based on predetermined operation by the user, whether or not a power supply from normal power supply section 171 is selected and normal power is turned on (step S17). Here, when CPU 191 determines that normal power is not turned on (step S17; NO), CPU 191 resets a timer count value of timing section 108 (step S18), and moves to step S13. CPU 191 then causes subsequent processing to be executed. That is, CPU 191 controls timing section 108 to start measuring an elapsed time after the previous stopping of rotation of cleaning roller 621 (step S13) and every time CPU 191 determines that a predetermined time has elapsed (step S14; YES), CPU 191 causes cleaning roller 621 to rotate, and causes substantially entire cleaning roller 621 to contact the washing liquid. This prevents solidification of cleaning roller 621.

On the other hand, when CPU 191 determines in step S17 that normal power is turned on (step S17; YES), CPU 191 ends the standby wiping processing.

As described above, in a standby state after a recording operation using the recording heads, inkjet recording apparatus 100 of the present embodiment supplies power from standby power supply section 172 to roller drive motor 621c every time a predetermined time elapses, and causes cleaning roller 621 to make at least one rotation. This causes the washing liquid to contact cleaning roller 621 and thereby prevents the washing liquid of cleaning roller 621 from evaporating during the standby state, causing solidification of cleaning roller 621.

That is, for example, even when a standby state is set with ink J containing resin being absorbed by cleaning roller 621, when cleaning roller 621 rotates, ink J is dissolved in the washing liquid in inner container 623. This allows ink J to be removed from cleaning roller 621. Particularly, rotating cleaning roller 621 a plurality of times so that substantially entire cleaning roller 621 is impregnated with the predetermined washing liquid allows cleaning roller 621 to be appropriately washed and allows the ink to be appropriately removed from cleaning roller 621.

When the recording operation is resumed after the standby state, ink ejecting section 121 can be appropriately wiped using not-solidified cleaning roller 621, and it is thereby possible to prevent damage to the nozzle of ink ejecting section 121.

Furthermore, timing of supplying power from standby power supply section 172 to roller drive motor 621c is controlled based on the timing result of the elapsed time after the recording operation. It is thereby possible to rotate cleaning roller 621 at predetermined timing so as to prevent solidification of cleaning roller 621 in the standby state.

Furthermore, by driving the supply pump of washing liquid storage section 627 based on the timing result of the elapsed time after the recording operation using recording head 102, timing of supplying the predetermined washing liquid from washing liquid storage section 627 to inner container 623 is controlled. This prevents the washing liquid in inner container 623 from decreasing due to drying in the standby state. Therefore, when cleaning roller 621 is made to rotate, the washing liquid can reliably contact cleaning roller 621. This makes it possible to prevent cleaning roller 621 from drying during the standby state and prevent solidification of cleaning roller 621.

The present invention is not limited to the above-described embodiment, but various improvements and design modifications can be made without departing from the scope of the present invention.

For example, according to the above embodiment, cleaning roller 621 is rotated every time a predetermined time elapses to prevent solidification of cleaning roller 621 in a standby state, but the means for preventing solidification of cleaning roller 621 is not limited to this.

That is, for example, inner container 623 may be provided with a mechanism (not shown) of moving cleaning roller 621 in a vertical direction and causing cleaning roller 621 to descend in a standby state so that entire cleaning roller 621 is immersed in the washing liquid in inner container 623 (see FIG. 12A). This may prevent evaporation of the water content in cleaning roller 621 and suppress solidification.

Furthermore, for example, cover member 628 whose bottom comes into close contact with the top edge of the

top opening of inner container 623 may be provided (see FIG. 12B) such that the bottom of cover member 628 is brought into close contact with the top edge of the top opening of inner container 623 so as to include the portion of cleaning roller 621 not immersed in the washing liquid during a standby state. This may prevent evaporation of the water content in cleaning roller 621 and suppress solidification.

Furthermore, in the above embodiment, rotation timing of cleaning roller 621 or washing liquid supply timing is controlled based on the timing result by timing section 108, but timing section 108 need not always be provided and a time interval for defining rotation timing of cleaning roller 621 or washing liquid supply timing may be set beforehand.

Furthermore, a more specific detailed structure or the like can also be changed as appropriate. In addition, the embodiment disclosed herein should be construed as merely illustrative, and not limitative of the remainder of the disclosure in any way whatsoever. The scope of the present invention is defined by the appended claims, not by the description above, and the scope of the present invention is intended to contain all changes that fall within the meaning and scope of the claims.

A case has been disclosed in the description above where ROM 193 is used as a computer-readable medium for the program according to the present invention, but the present invention is not limited to this example. Non-volatile memory such as flash memory or a portable recording medium such as CD-ROM is applicable as other computer-readable media. Moreover, carrier wave (carrier) is also applicable to the present invention as a medium that provides data of the program according to the present invention via a communication channel.

## Examples

The present invention will be described more specifically with examples, but the present invention is not limited to these examples. Note that "part(s)" and "%" in Examples mean "part(s) by mass" and "mass%", respectively, unless specifically defined otherwise.

### Example 1

«Preparation of ink»

[Preparation of cyan pigment dispersion]

20 parts of Flowlen TG-750W (solid content: 40%, manufactured by Evonik Degussa Corp.) serving as a pigment dispersing agent were added to 65 parts of ion-exchanged water. To this solution, 15 parts of C.I. Pigment Blue 15:3 were added as a cyan pigment, followed by premixing. The premix was subjected to dispersion treatment with a sand grinder loaded with 50 vol% of 0.5 mm zirconium beads to yield a cyan pigment dispersion having a pigment solid content of 15%.

[Preparation of ink C-1]

30 parts of 3-methoxy-N,N-dimethylpropionamides (hereinafter, referred to as "A-1") were added to 30 parts of ion-exchanged water as β-hydroxypropionamides and 16.7 parts of Fine Tex ES650 (solid content 30%, manufactured by DIC Corporation) were added to this as a binder resin, stirred, and 0.1 parts of BYK-340 (manufactured by BYK Japan KK) were further added as a fluorine-based surfactant and adjusted with ion-exchanged water so that the total amount was 80 parts. Next, 20 parts of the cyan pigment dispersion prepared above were added to this solution, stirred, filtered using a 0.8 μm filter and ink C-1 which is a cyan ink was prepared.

[Preparation of inks C-2 to C-12]

Inks C-2 to C-12 which are cyan inks were prepared in the same way as for the preparation of ink C-1 above except that the type and content of β-alkoxypropionamides represented by general formula (1), the type and content of the water soluble organic solvent and the type of the binder resin were changed to the combination described in Table 1.

Note that Table 1 describes only changes in the type and content (parts by weight) of β-alkoxypropionamides, the type and content (parts by weight) of the water soluble organic solvent and the type (solid content) of the binder resin. Furthermore, details of the respective additives described in Table 1 in abbreviated names are as follows.

(β-alkoxypropionamides)

A-1: 3-methoxy-N,N-dimethylpropionamide
A-2: 3-butoxy-N,N-dimethylpropionamide

A-3: 3-ethoxy-N,N-diethylpropionamide

(Water soluble organic solvent)

1,2HDO: 1,2-hexanediol
DPGME: dipropylene glycol monomethyl ether
DPGPE: dipropylene glycol monopropyl ether
2PDN: N-methyl-2-pyrrolidinone
NMP: N-methyl pyrrolidone
PG: propylene glycol
PGPE: propylene glycol monopropyl ether
TEGBE: triethylene glycol monobutyl ether

(Binder resin)

ES650: Fine Tex ES650 (aqueous polyester resin, manufactured by DIC Corporation)
SF500M: superflex 500M (aqueous urethane resin, manufactured by DAIICHI KOGYO SEIYAKU Co., Ltd.)
V700: Viniblan 700 (vinyl chloride-based resin, manufactured by Nissin Chemical Industry CO., Ltd.)
A515: AQUACER515 (polyethylene wax emulsion, manufactured by BYK Japan KK)
PDX: Joncryl PDX-6102B (water soluble acrylic resin, manufactured by BASF Japan)
JDX: Joncryl JDX-6500 (water soluble acrylic resin, manufactured by BASF Japan)
52J: Joncryl 52J (water soluble acrylic resin, manufactured by BASF Japan)
J538: Joncryl 538 (emulsion type acrylic resin, manufactured by BASF Japan)

[Table 1]

| Ink number | *1 | | Organic solvent 1 | | Organic solvent 2 | | Binder resin | | |
|---|---|---|---|---|---|---|---|---|---|
| | Type | Content | Type | Content | Type | Content | Type | Content | Acid value |
| C-1 | A-1 | 30 | - | - | - | - | ES650 | 5 | - |
| C-2 | A-3 | 15 | 1, 2HDO | 10 | DPGME | 5 | ES650 | 5 | - |
| C-3 | A-2 | 8 | DPGPE | 5 | 2-PDN | 10 | ES650 | 5 | - |
| C-4 | - | - | DPGPE | 5 | DPGME | 10 | SF500M | 5 | - |
| C-5 | - | - | 1, 2HDO | 10 | NMP | 10 | ES650 | 5 | - |
| C-6 | A-2 | 5 | 1, 2HDO | 10 | DPGME | 5 | SF500M | 5 | - |
| C-7 | A-2 | 5 | 1, 2HDO | 15 | PG | 5 | V700 | 5 | - |
| C-8 | A-3 | 5 | PGPE | 10 | PG | 5 | A515 | 5 | - |
| C-9 | A-1 | 5 | 1, 2HDO | 10 | DPGME | 5 | PDX | 5 | 65 |
| C-10 | A-2 | 5 | TEGBE | 10 | 2-PDN | 5 | JDX | 5 | 74 |
| C-11 | A-2 | 5 | TEGBE | 10 | 2-PDN | 5 | 52J | 5 | 238 |
| C-12 | A-3 | 5 | 1, 2HDO | 15 | PG | 5 | J538 | 5 | - |
| *1: β-alkoxypropionamides<br>Numerical value: parts by weight | | | | | | | | | |

<Evaluation of ejection stability by nozzle surface wiping mechanism>

The piezo type head having a nozzle diameter of 28 μm, a drive frequency of 10 kHz, number of nozzles of 512, a minimum liquid dosage of 14 p1 and a nozzle density of 180 dpi was loaded with C-1 to C-5 respectively, which are the cyan inks prepared above. A drive pulse having a pulse width of 5 μsec was applied to the electrode of the recording head at a voltage adjusted so that the flying speed of an ink droplet could be 6 m/s, the recording head was driven in 3 cycles (every two ink channels), and solid images were continuously printed for one hour with levels 1 to 15

combining the presence or absence of wiping operation and the presence or absence of supply of a cleaning liquid during wiping described in Table 2 on IJ180-10 (manufactured by Sumitomo 3M Limited) which is a vinyl chloride resin sheet. An external environment at this time was 25°C and 50%RH.

Ejection stability was evaluated using the wipe unit described in FIG. 1 to FIGS. 4A and 4B, 30 minutes after printing started, by performing ejections for one hour continuously at three levels: levels at which wiping operation was conducted on the head nozzle surface using the following absorbing substance (operation 3 and operation 5: a level using a cleaning liquid, operation 2 and operation 4: a level not using a cleaning liquid), and a level at which wiping operation was not conducted (operation 1), and then visually observing uniformity of solid images accompanying nozzle deflection or nozzle defects from each nozzle, according to the following standards.

[Wiping operation]

(Operation 1: No wiping operation)

(Operation 2: Not using cleaning liquid during wiping)

In the head nozzle surface wiping operation, a polyester cloth biased to a polyethylene terephthalate film of the maintenance unit was used to wipe the nozzle surface of the piezo type head at a speed of 5 mm/s.

(Operation 3: Using cleaning liquid during wiping)

In the head nozzle surface wiping operation, a polyester cloth biased to a polyethylene terephthalate film of the maintenance unit was used with the polyester cloth being impregnated with the following cleaning liquid to wipe the nozzle surface of the piezo type head at a speed of 5 mm/s.

(Operation 4: Not using cleaning liquid during wiping)

In the head nozzle surface wiping operation, the nozzle surface of the piezo type head was wiped with a sponge roller made of polyvinyl alcohol at a speed of 100 mm/s and with an amount of pressing of 1 to 2 mm.

(Operation 5: Using cleaning liquid during wiping)

In the head nozzle surface wiping operation, the nozzle surface of the piezo type head was wiped with a sponge roller made of polyvinyl alcohol impregnated with the following cleaning liquid, at a speed of 100 mm/s and with an amount of pressing of 1 to 2 mm. The sponge roller rotated and was squeezed by a squeezing roller immediately before coming into contact with the recording head, thus providing an optimum content of the cleaning liquid for wiping.

<Cleaning liquid>

The cleaning liquid was prepared so as to contain 5.0 parts of dipropylene glycol monopropyl ether, 3.0 parts of 2-amino-2-methyl-1-propanol and ion-exchanged water totaling to 100 parts.

A: No white streaks or density unevenness observed in solid image
B: Almost no white streaks or density unevenness observed in solid image
C: Slight white streaks or density unevenness observed in solid image
D: Obvious white streaks or density unevenness observed in solid image

The results obtained above are shown in Table 2.

[Table 2]

| Level number | Ink number | Wiping mechanism | | | Ejection stability | Remarks |
|---|---|---|---|---|---|---|
| | | Operation | Wiping | Cleaning liquid | | |
| 1 | C-1 | 3 | Yes | Yes | A | Present invention |
| 2 | C-2 | 3 | Yes | Yes | A | Present invention |
| 3 | C-3 | 3 | Yes | Yes | A | Present invention |

(continued)

| Level number | Ink number | Wiping mechanism | | | Ejection stability | Remarks |
|---|---|---|---|---|---|---|
| | | Operation | Wiping | Cleaning liquid | | |
| 4 | C-2 | 5 | Yes | Yes | A | Present invention |
| 5 | C-1 | 2 | Yes | No | B | Present invention |
| 6 | C-2 | 2 | Yes | No | B | Present invention |
| 7 | C-3 | 2 | Yes | No | B | Present invention |
| 8 | C-2 | 4 | Yes | No | B | Present invention |
| 9 | C-1 | 1 | No | - | C | Comparative example |
| 10 | C-2 | 1 | No | - | D | Comparative example |
| 11 | C-3 | 1 | No | - | D | Comparative example |
| 12 | C-4 | 3 | Yes | Yes | C | Comparative example |
| 13 | C-5 | 3 | Yes | Yes | D | Comparative example |
| 14 | C-4 | 1 | No | - | D | Comparative example |
| 15 | C-5 | 1 | No | - | D | Comparative example |

As is obvious from the results described in Table 2, the levels resulting from using the ink containing the binder resin and β-alkoxypropionamides according to the present invention and conducting wiping operation while supplying a cleaning liquid containing an organic solvent as the ink absorbing member have excellent ejection stability compared to the comparative example.

<Evaluation of image formed>

[Formation of image]

Using the same inkjet printer as that used for evaluation of the ejection stability, the piezo type head was loaded with inks C-3, C-4, C-6 to C-12 prepared above. Furthermore, the inkjet printer was equipped with a contact type heater so as to be arbitrarily heated from the reverse side of the recording medium (surface opposite to the recording head). Next, using IJ180-10 (manufactured by Sumitomo 3M Limited) which is a vinyl chloride resin sheet as a recording medium, a solid image was continuously printed for one hour at a printing resolution of 720 dpix720 dpi in an environment of 25°C and 50%RH. At this time, in the same way as for the above evaluation of ejection stability, wiping operation was conducted (levels 14 to 30) using a cleaning liquid during wiping in the same way as for operation 2 not using a cleaning liquid and above operation 3 during wiping with the combination described in Table 3, 30 minutes after printing started. The "dpi" referred to in the present invention represents the number of dots per 2.54 cm.

During printing on the above recording medium, the surface temperature of the recording medium during image recording was controlled to 50°C by heating the recording medium from the reverse side using a heater. The surface temperature of the recording medium was measured with a contactless thermometer (model IT-530N, manufactured by Horiba, Ltd.).

[Evaluation of ejection stability and image formed]

(Evaluation of ejection stability)

The ejection stability of inks C-3, C-4, C-6 to C-12 was evaluated using the same method described above.

(Evaluation of friction resistance)

Each solid image formed above was rubbed with dry cotton (shirting No. 3) under a load of 500 g and the rubbed image was visually observed and friction resistance was evaluated according to the following standard.

A: Image is unchanged after rubbing 50 times or more.

B: Certain scar remains after rubbing 30 to 50 times but image density is not affected.
C: Image density decreases to certain extent after rubbing 5 to 30 times.
D: Image density decreases after rubbing 4 times or less.

Evaluation of gloss

Glossiness of each solid image formed above was visually observed and evaluated according to the following standard.

A: There is no difference in glossiness between printed portion and non-printed portion, exhibiting excellent glossiness.
B: There is a certain difference in glossiness between printed portion and non-printed portion, but there is no problem with image quality.
C: Difference in glossiness between printed portion and non-printed portion is recognizable, and image quality is not acceptable.
D: There is a great difference in glossiness between printed portion and non-printed portion, and considerable degradation of image quality is observed.

(Evaluation of adhesiveness)
According to a JIS K 5400 cross-cut adhesion test, an adhesive tape (scotch #250 manufactured by Sumitomo 3M Limited) was pasted to each solid image formed above, pressed to and fro using a 2 kg roller, and then the adhesive tape was peeled at a stretch, the number of the remaining cross-cut specimens was investigated and adhesiveness was evaluated.

B: Adhesive residual factor: 90% or more and less than 100%
C: Adhesive residual factor: 70% or more and less than 90%
D: Adhesive residual factor: less than 70%

Table 3 shows the evaluation results.

[Table 3]

| Level number | Ink number | Wiping operation | | Ejection stability | Friction resistance | Glossiness | Adhesiveness | Remarks |
|---|---|---|---|---|---|---|---|---|
| | | Operation | Cleaning liquid | | | | | |
| 16 | C-3 | 3 | Yes | A | B | C | C | Present invention |
| 17 | C-6 | 3 | Yes | A | A | B | B | Present invention |
| 18 | C-7 | 3 | Yes | A | A | B | B | Present invention |
| 19 | C-8 | 3 | Yes | A | B | B | C | Present invention |
| 20 | C-9 | 3 | Yes | A | A | A | B | Present invention |
| 21 | C-9 | 5 | Yes | A | A | A | B | Present invention |
| 22 | C-10 | 3 | Yes | A | A | A | B | Present invention |
| 23 | C-11 | 3 | Yes | A | A | A | C | Present invention |
| 24 | C-12 | 3 | Yes | A | A | A | B | Present invention |
| 25 | C-4 | 3 | Yes | C | D | D | D | Comparative example |
| 26 | C-3 | 2 | No | B | B | C | C | Present invention |
| 27 | C-6 | 2 | No | B | A | B | B | Present invention |
| 28 | C-8 | 2 | No | B | B | B | C | Present invention |
| 29 | C-12 | 2 | No | B | A | A | B | Present invention |
| 30 | C-4 | 2 | No | D | D | D | D | Comparative example |

As is obvious from the result described in Table 3, levels obtained using the ink containing the binder resin and β-alkoxypropionamides according to the present invention through wiping operation while supplying a cleaning liquid containing an organic solvent to the ink absorbing member exhibited excellent ejection stability and the image formed had excellent friction resistance and glossiness compared to the comparative example.

Example 2

«Preparation of ink»

[Preparation of inks C-13 to C-19]

C-13 to C-19 were prepared in the same way as in the preparation of Ink C-9 according to Example 1 (binder resin: Joncryl PDX-6102B, solid content concentration 24.5%, manufactured by BASF, 5.0 parts of solid content), except that the type and content of β-alkoxypropionamides, the type and content of the organic solvent and the type and content of the surfactant were changed to the combination described in Table 4.

Note that Table 4 describes only changes in the type and content (parts by weight) of β-alkoxypropionamides, the type and content (parts by weight) of the organic solvent and the type and content (parts by weight) of the surfactant. Details of the surfactants described in the abbreviate names in Table 4 are as follows.

E1010: Olfine E1010 (acetylene alcohol-based surfactant, manufactured by Nissin Chemical Industry CO., Ltd.)
DYN800: BYK-DYNWET 800 (alcohol alkoxylate surfactant, manufactured by BYK Japan KK)
BYK-340: BYK-340 (fluorine-based surfactant, manufactured by BYK Japan KK)
KF-351A: KF-351A (silicone-based surfactant, manufactured by Shin-Etsu Chemical Co., Ltd.)

[Table 4]

| Ink number | *1 | | Organic solvent 1 | | Organic solvent 2 | | Surfactant 1 | | Surfactant 2 | |
|---|---|---|---|---|---|---|---|---|---|---|
| | Type | Content | Type | Content | Type | Content | Type | Content | Type | Content |
| C-13 | A-1 | 5 | 1, 2HDO | 15 | PG | 5 | E1010 | 1.0 | - | - |
| C-14 | A-2 | 5 | PGPE | 10 | PG | 5 | DYN800 | 1.0 | - | - |
| C-15 | A-1 | 10 | 1, 2HDO | 10 | DPGME | 5 | BKY-340 | 0.1 | - | - |
| C-16 | A-3 | 5 | DPGPE | 5 | 2-PDN | 10 | KF-351A | 0.8 | - | - |
| C-17 | A-2 | 5 | 1, 2HDO | 10 | DPGME | 5 | BKY-340 | 0.1 | DYN800 | 1.0 |
| C-18 | - | - | 1, 2HDO | 15 | PG | 5 | BKY-340 | 0.1 | - | - |
| C-19 | - | - | DPGPE | 8 | DPGME | 10 | KF-351A | 0.8 | - | - |
| *1: β-alkoxypropionamides<br>Numerical value: parts by weight | | | | | | | | | | |

<Formation of image>

Evaluation of pin hole resistance

In an environment of temperature 25°C and humidity 50%RH, the recording heads were loaded with inks C-13 to C-19 respectively in the same way as in Example 1, under similar drive conditions, using IJ180-10 (manufactured by Sumitomo 3M Limited) which is a vinyl chloride resin sheet as a recording medium, the head nozzle surface was wiped with an ink absorbing substance at a printing resolution of 720 dpix720 dpi through operation 3 using a solid image cleaning liquid (levels 31 to 37). During printing on the recording medium, the surface temperature of the recording medium during image recording was controlled to 50°C by heating the recording medium from the reverse side using a heater.

Next, the presence or absence of white streaks on the solid image obtained was visually observed and image quality was evaluated to verify effects using the cleaning liquid according to the following standards.

A: Solid image has no white streaks and image is uniform.

B: Solid image has tiny white portion, but image is substantially uniform.
C: Solid image has some white spotted portions.
D: Entire solid image has quite many white streaks.

[Evaluation of ejection stability 2]

A solid image was outputted in the same way as in the above evaluation of the white streak resistance except that the printing environment was changed to a low humidity environment of temperature 25°C and humidity 25%RH, and ejection stability was evaluated according to the following standards to verify effects using the cleaning liquid in a low humidity environment.

A: Solid image has no white streaks or density unevenness.
B: Solid image has almost no white streaks or density unevenness.
C: Solid image has tiny white streaks or density unevenness.
D: Solid image has obvious density unevenness.

Table 5 shows the evaluation results.

[Table 5]

| Level number | Ink number | Wiping operation number | White streak resistance | Ejection stability 2 | Remarks |
|---|---|---|---|---|---|
| 31 | C-13 | Operation 3 | B | B | Present invention |
| 32 | C-14 | Operation 3 | B | B | Present invention |
| 33 | C-15 | Operation 3 | A | B | Present invention |
| 34 | C-16 | Operation 3 | A | B | Present invention |
| 35 | C-17 | Operation 3 | A | B | Present invention |
| 36 | C-18 | Operation 3 | D | C | Comparative example |
| 37 | C-19 | Operation 3 | C | D | Comparative example |

As is obvious from the results described in Table 5, levels resulting from performing wiping operation using an ink containing the binder resin and β-alkoxypropionamides according to the present invention while supplying a cleaning liquid containing an organic solvent to the ink absorbing member exhibited excellent ejection stability when ejection was continuously performed with white streak resistance and in a low humidity environment compared to the comparative example, and the level using the cleaning liquid during wiping in particular exhibited further improved ejection stability in a low humidity environment.

Industrial Applicability

The present invention can provide a method for forming an inkjet image that obtains repelling-free high quality images with excellent ejection stability, excellent image durability, and high gloss. The present invention can also prevent solidification of a roller in a standby state, and can thereby appropriately wipe an ink stuck to the ink ejecting section using a roller even when resuming recording operation after the standby state and suppress damage to the nozzle of the ink ejecting section.

Reference Signs List

1 Inkjet printer
3 Cleaning liquid tank
4 Recording head
6 Ink tank

13 Wipe unit
15 Cap
50 Ink absorbing member
51 Sheet-like flexible member
56 First support member
57 Second support member
100 Inkjet recording apparatus
102 Recording head
103 Carriage
131 Carriage drive motor
104 Platen
141 Heater
105 Ink supply section
151 Ink tank
152 Ink channel
153 Subtank
154 Damper
162 Wiping apparatus
109 Control section
191 CPU
192 RAM
193 ROM
193a Wiping control program
193b Standby control program
108 Timing section
107 Power supply section
171 Normal power supply section
172 Standby power supply section
111 Conveying section
112 Conveying motor
121 Ink ejecting section
621 Cleaning roller
621b Wiping member
621c Roller drive motor

## Claims

**1.** A method for washing a recording head, comprising:

an image forming step of ejecting an inkjet ink containing at least water, a coloring material, a binder resin and a water soluble organic solvent represented by general formula (1) from a recording head to form an image on a recording medium; and
a washing step of washing the recording head, after the image forming step, using an ink absorbing member that absorbs the inkjet ink and a wiping member that wipes a nozzle surface of the recording head using a wipe unit wherein the ink absorbing member holds a cleaning liquid containing an organic solvent:

[Formula 1]

General formula (1)

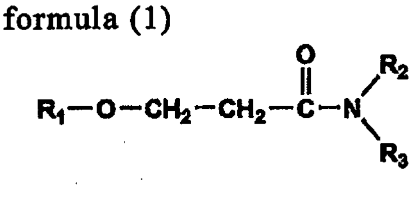

wherein $R_1$ represents a linear or branched alkyl group having 1 to 6 carbon atoms, $R_2$ and $R_3$ each represent a

hydrogen atom or a linear or branched alkyl group having 1 to 4 carbon atoms, and $R_2$ and $R_3$ may be the same or different.

2. The method for washing a recording head according to claim 1, wherein the washing step is performed by a roller impregnated with a washing liquid.

3. A method for forming an image comprising, after the washing step according to claim 1, an image forming step of forming an image by ejecting the inkjet ink onto the recording medium from the recording head.

4. A method for forming an image comprising:

a washing step of washing a recording head using an ink absorbing member that absorbs an inkjet ink and a wiping member that wipes a nozzle surface of the recording head using a wipe unit wherein the ink absorbing member holds a cleaning liquid containing an organic solvent; and
an image forming step of ejecting an inkjet ink containing at least water, a coloring material, a binder resin and a water soluble organic solvent represented by general formula (1) from the recording head after the washing step to form an image on a recording medium:

[Formula 2]

General formula (1)

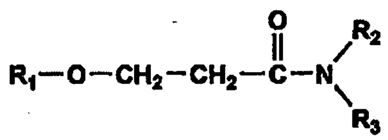

wherein $R_1$ represents a linear or branched alkyl group having 1 to 6 carbon atoms, $R_2$ and $R_3$ each represent a hydrogen atom or a linear or branched alkyl group having 1 to 4 carbon atoms, and $R_2$ and $R_3$ may be the same or different.

5. The method for forming an image according to claim 4, wherein the washing step is performed by a roller impregnated with a washing liquid.

6. The method for forming an image according to claim 4 or 5, wherein the binder resin is one selected from an acrylic-based resin, a polyurethane resin, a polyvinyl-based resin and a polyolefin resin.

7. The method for forming an image according to claim 6, wherein the binder resin is an acrylic-based resin.

8. The method for forming an image according to claim 3 or 4, wherein the inkjet ink contains a fluorine-based surfactant or a silicone-based surfactant.

9. The method for forming an image according to claim 3 or 4, wherein the surface of the recording medium is composed of a resin component.

**Patentansprüche**

1. Verfahren zur Reinigung eines Schreibkopfs, das folgendes umfasst:

einen Bildherstellungsschritt des Ausstoßens einer Tintenstrahltinte, die mindestens Wasser, ein Farbmaterial, ein Bindeharz und ein wasserlösliches organisches Lösungsmittel, das durch die allgemeine Formel (1) dargestellt ist, enthält, aus einem Schreibkopf zur Herstellung eines Bilds auf einem Aufzeichnungsmedium; und
einen Reinigungsschritt des Reinigens des Schreibkopfs nach dem Bildherstellungsschritt unter Verwendung eines Tinten-absorbierenden Elements, das die Tintenstrahltinte absorbiert, und eines Wischelements, das die Düsen-Oberfläche des Schreibkopfs unter Verwendung einer Wischeinheit abwischt, wobei das tintenabsorbierende Element eine Reinigungsflüssigkeit hält, die ein organisches Lösemittel enthält:

Allgemeine Formel (1)

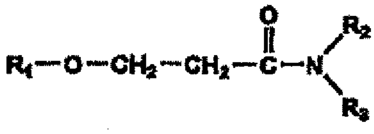

wobei $R_1$ eine lineare oder verzweigte Alkylgruppe mit 1-6 Kohlenstoffatomen darstellt, $R_2$ und $R_3$ jeweils ein Wasserstoffatom oder eine lineare oder verzweigte Alkylgruppe mit 1-4 Kohlenstoffatomen darstellt, wobei $R_2$ und $R_3$ gleich oder verschieden sein können.

2. Verfahren zur Reinigung eines Schreibkopfs nach Anspruch 1,
wobei der Reinigungsschritt durch eine mit einer Reinigungsflüssigkeit getränkte Walze durchgeführt wird.

3. Verfahren zur Herstellung eines Bilds, umfassend, nach dem Reinigungsschritt nach Anspruch 1, einen Bildherstellungsschritt des Herstellens eines Bilds durch Ausstoßen der Tintenstrahltinte auf das Aufzeichnungsmedium aus dem Schreibkopf.

4. Verfahren zur Herstellung eines Bilds, folgendes umfassend:

einen Reinigungsschritt des Reinigens eines Schreibkopfs unter Verwendung eines tintenabsorbierenden Elements, das eine Tintenstrahltinte absorbiert, und eines Wischelements, das eine Düsen-Oberfläche des Schreibkopfs unter Verwendung einer Wischeinheit abwischt, wobei das tintenabsorbierende Element eine Reinigungsflüssigkeit hält, die ein organisches Lösungsmittel, enthält; und
einen Bildherstellungsschritt des Ausstoßens einer Tintenstrahltinte, die mindestens Wasser, ein Farbmaterial, ein Bindeharz und ein wasserlösliches organisches Lösungsmittel, das durch die allgemeine Formel (1) dargestellt ist, enthält, aus dem Schreibkopf nach dem Reinigungsschritt, um ein Bild auf einem Aufzeichnungsmedium zu erzeugen:

Allgemeine Formel (1)

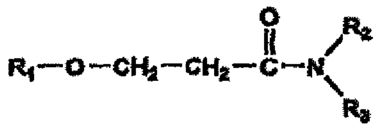

wobei $R_1$ eine lineare oder verzweigte Alkylgruppe mit 1-6 Kohlenstoffatomen darstellt,
$R_2$ und $R_3$ jeweils ein Wasserstoffatom oder eine lineare oder verzweigte Alkylgruppe mit 1-4 Kohlenstoffatomen darstellt, wobei $R_2$ und $R_3$ gleich oder verschieden sein können.

5. Verfahren zur Herstellung eines Bilds nach Anspruch 4, wobei der Reinigungsschritt durch eine mit einer Reinigungsflüssigkeit getränkten Walze durchgeführt wird.

6. Verfahren zur Herstellung eines Bilds nach Anspruch 4 oder 5, wobei das Bindeharz ein aus einem Acryl-basierten Harz, einem Polyurethanharz, einem Polyvinyl-basierten Harz und einem Polyolefinharz ausgewähltes ist.

7. Verfahren zur Herstellung eines Bilds nach Anspruch 6, wobei das Bindeharz ein Acryi basiertes Harz ist.

8. Verfahren zur Herstellung eines Bilds nach Anspruch 3 oder 4, wobei die Tintenstrahltinte ein Fluor-basiertes grenzflächenaktives Mittel oder ein Silicon-basiertes grenzflächenaktives Mittel enthält.

9. Verfahren zur Herstellung eines Bilds nach Anspruch 3 oder 4, wobei die Oberfläche des Aufzeichnungsmediums aus einer Harzkomponente besteht.

## Revendications

1. Procédé pour nettoyer une tête d'impression, comprenant :

   une étape de formation d'image d'éjection d'une encre à jet d'encre contenant au moins de l'eau, une matière colorante, une résine liante et un solvant organique hydrosoluble représenté par la formule générale (1) à partir d'une tête d'impression pour former une image sur un support d'enregistrement ; et
   une étape de nettoyage pour nettoyer une tête d'impression, après l'étape de formation d'image, en utilisant un élément absorbant l'encre qui absorbe l'encre à jet d'encre et un élément d'essuyage qui essuie une surface de buse de la tête d'impression en utilisant une unité d'essuyage dans lequel l'élément absorbant l'encre contient un liquide de nettoyage contenant un solvant organique :

   Formule générale (1)

   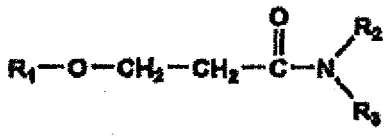

   dans laquelle $R_1$ représente un groupe alkyle linéaire ou ramifié ayant de 1 à 6 atomes de carbone, $R_2$ et $R_3$ représentent chacun un atome d'hydrogène ou un groupe alkyle linéaire ou ramifié ayant de 1 à 4 atomes de carbone, et $R_2$ et $R_3$ peuvent être identiques ou différents.

2. Procédé pour nettoyer une tête d'impression selon la revendication 1, dans lequel l'étape de nettoyage est réalisée avec un rouleau imprégné avec un liquide de nettoyage.

3. Procédé pour former une image comprenant, après l'étape de nettoyage selon la revendication 1, une étape de formation d'image de formation d'une image par éjection de l'encre à jet d'encre sur le support d'enregistrement à partir de la tête d'impression.

4. Procédé pour former une image comprenant :

   une étape de nettoyage pour nettoyer une tête d'impression en utilisant un élément absorbant l'encre qui absorbe une encre à jet d'encre et un élément d'essuyage qui essuie une surface de buse de la tête d'impression en utilisant une unité d'essuyage dans lequel l'élément absorbant l'encre contient un liquide de nettoyage contenant un
   solvant organique ; et
   une étape de formation d'image pour éjecter une encre à jet d'encre contenant au moins de l'eau, une matière colorante, une résine liante et un solvant organique hydrosoluble représenté par la formule générale (1) d'une tête d'impression pour former une image sur un support d'enregistrement :
   Formule générale (1)
   une étape de nettoyage pour nettoyer une tête d'impression

   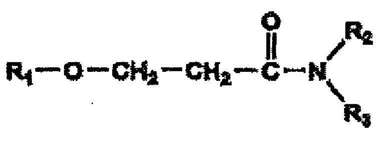

   dans laquelle $R_1$ représente un groupe alkyle linéaire ou ramifié ayant de 1 à 6 atomes de carbone, $R_2$ et $R_3$ représentent chacun un atome d'hydrogène ou un groupe alkyle linéaire ou ramifié ayant de 1 à 4 atomes de carbone, et $R_2$ et $R_3$ peuvent être identiques ou différents.

5. Procédé de formation d'une image selon la revendication 4, dans lequel l'étape de nettoyage est réalisée par un rouleau imprégné avec un liquide pour nettoyer.

6. Procédé de formation d'une image selon la revendication 4 ou 5, dans lequel la résine liante est l'une choisie parmi

une résine à base d'acrylique, une résine de polyuréthane, une résine à base de polyvinyle et une résine de polyoléfine.

7. Procédé de formation d'une image selon la revendication 6, dans lequel la résine liante est une résine à base d'acrylique.

8. Procédé de formation d'une image selon la revendication 3 ou 4, dans lequel l'encre à jet d'encre contient un tensioactif à base de fluor ou un tensioactif à base de silicone.

9. Procédé de formation d'une image selon la revendication 3 ou 4, dans lequel la surface du support d'enregistrement est composée d'un composant de résine.

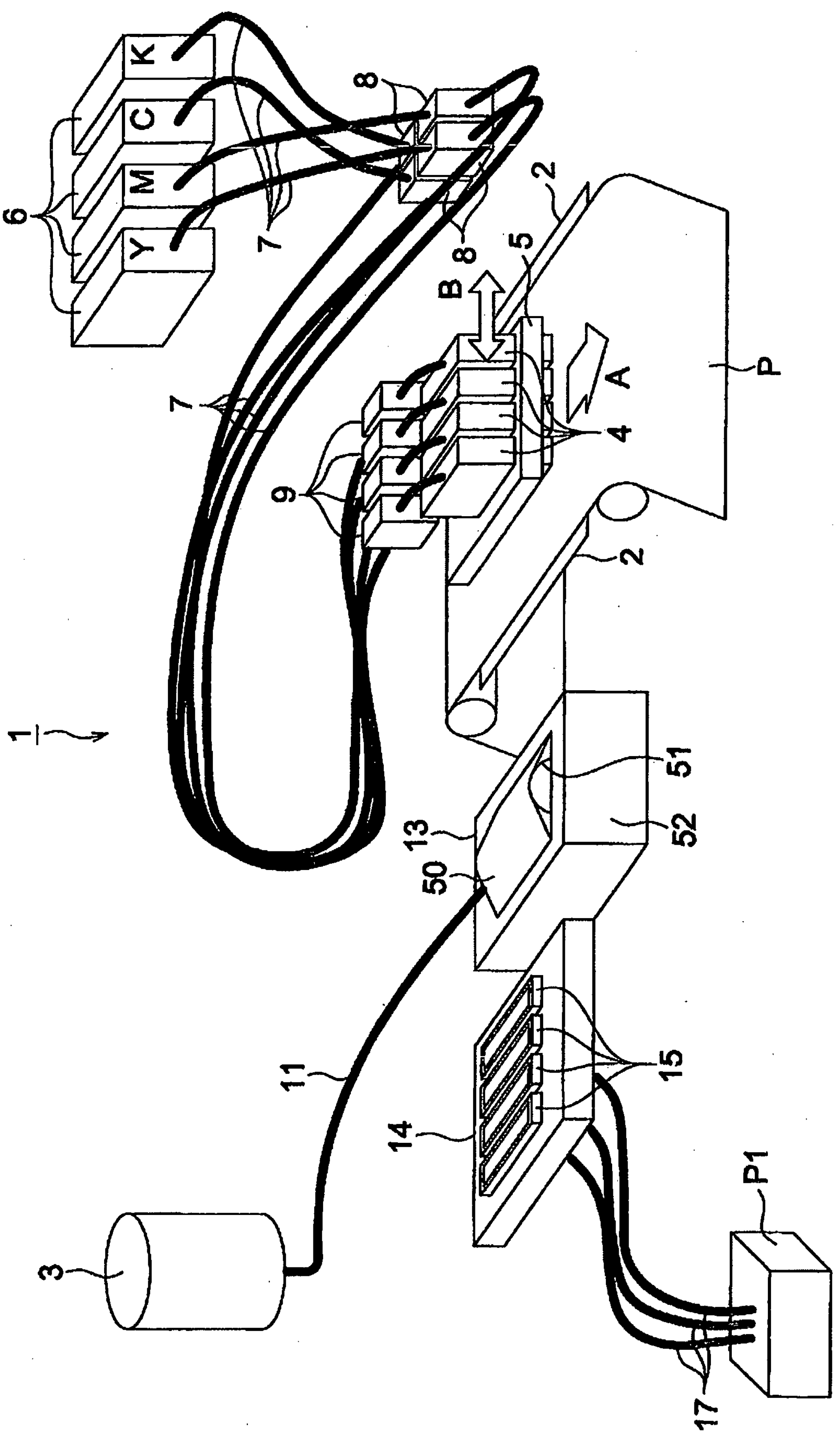


FIG. 1

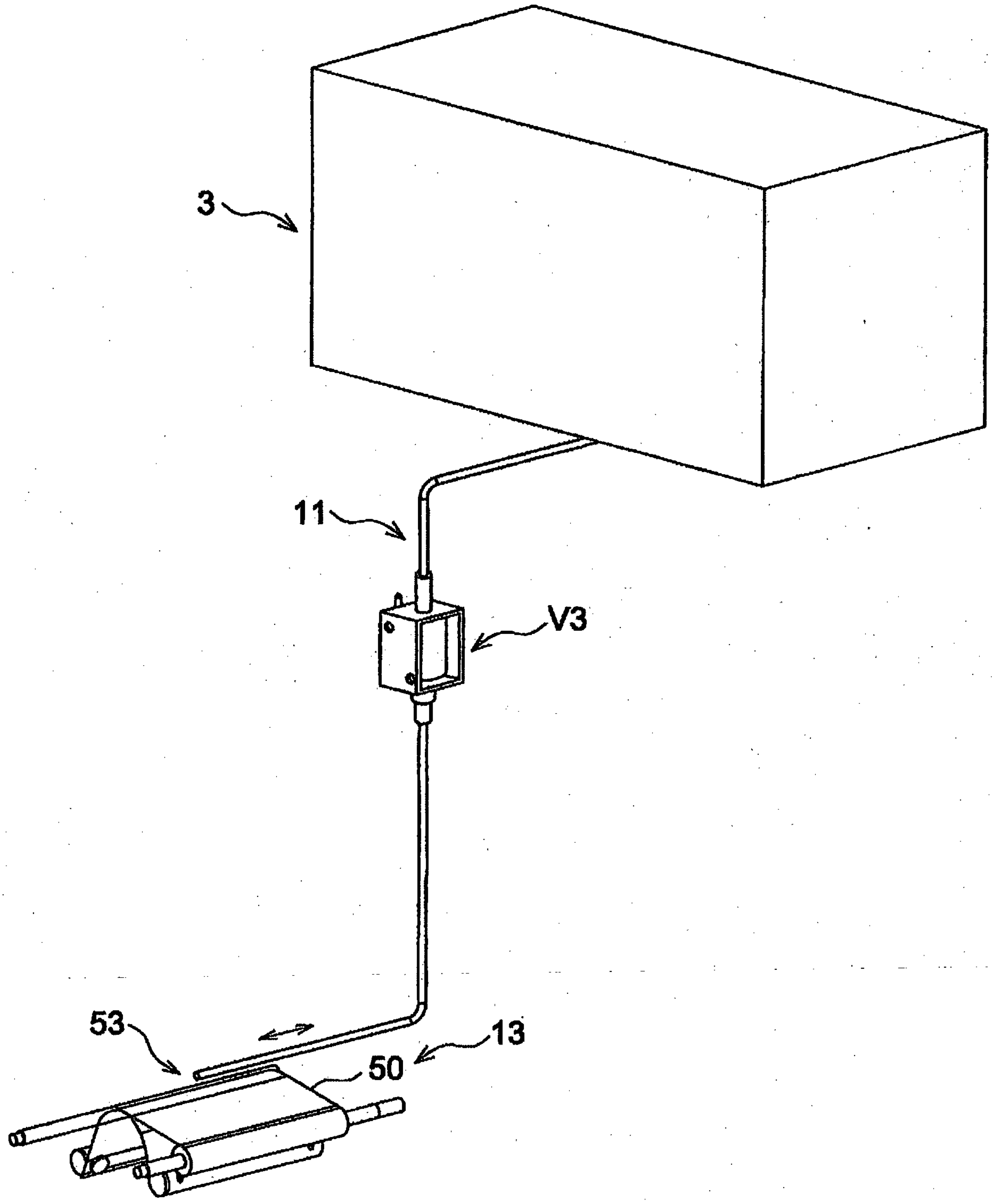


FIG. 2

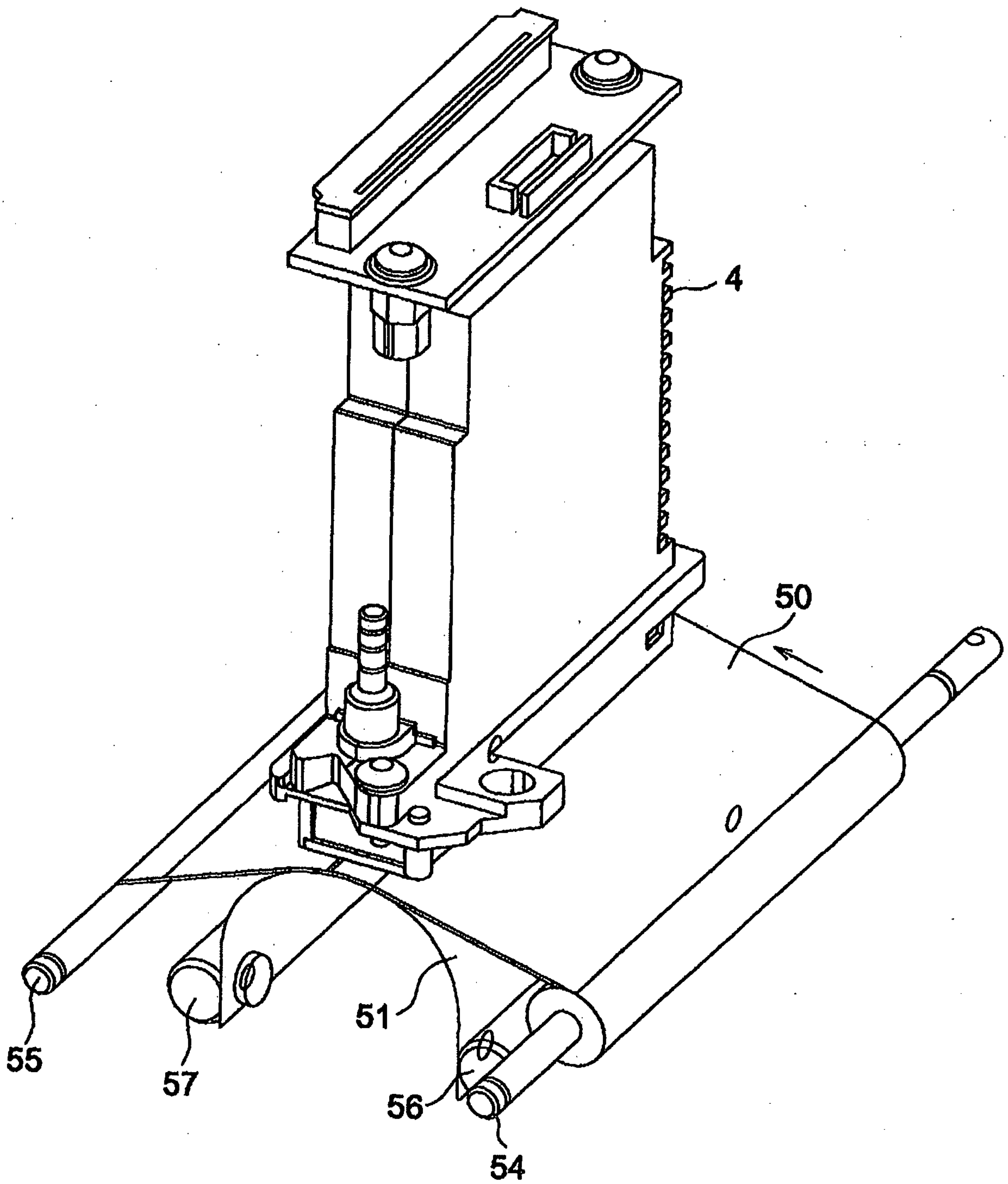


FIG. 3

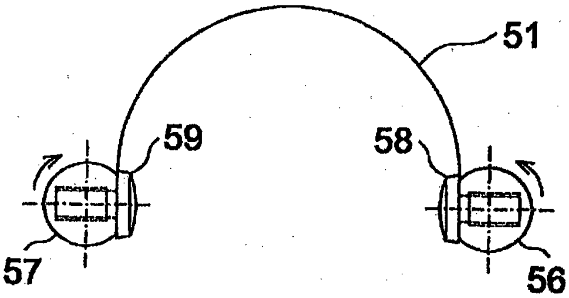


FIG. 4A

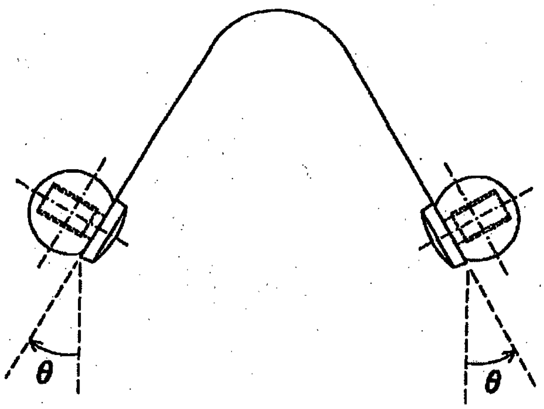


FIG. 4B

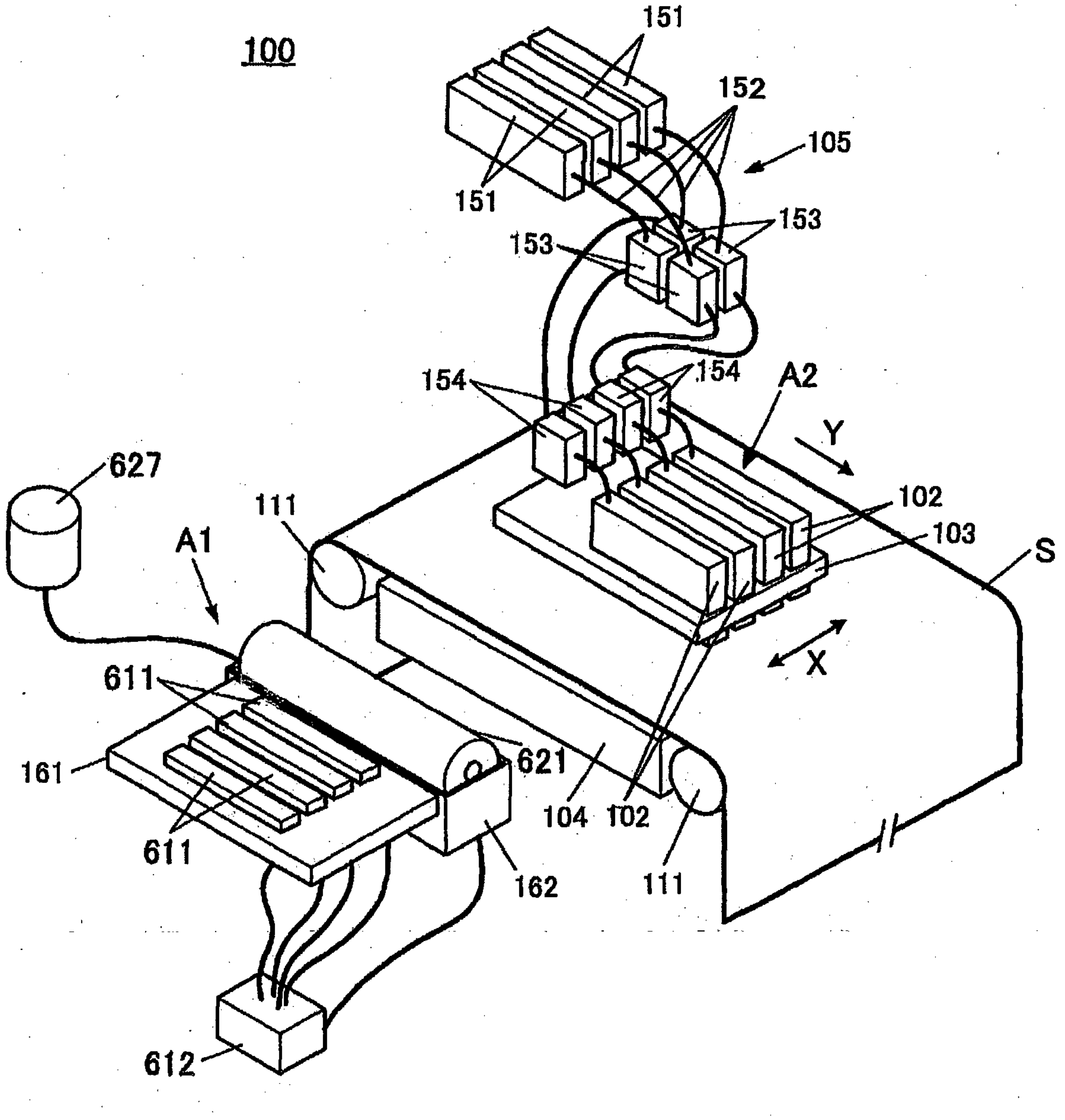
100
151
152
105
151
153
153
154
154
A2
Y
627
111
102
A1
103
S
611
X
621
161
104
102
611
111
162
612

FIG. 5

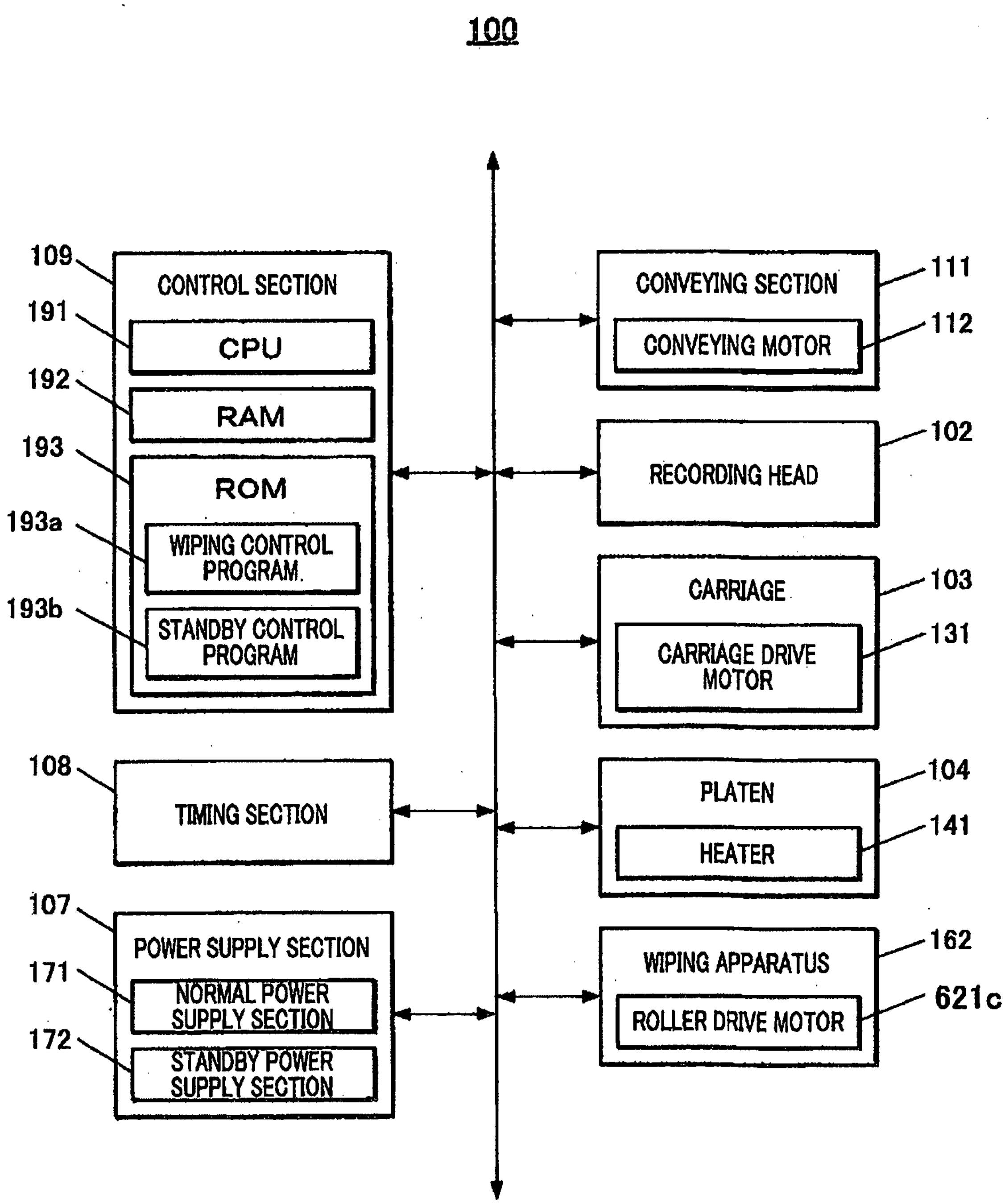
100
109
CONTROL SECTION
191
CPU
192
RAM
193
ROM
193a
WIPING CONTROL PROGRAM
193b
STANDBY CONTROL PROGRAM
108
TIMING SECTION
107
POWER SUPPLY SECTION
171
NORMAL POWER SUPPLY SECTION
172
STANDBY POWER SUPPLY SECTION
CONVEYING SECTION
111
CONVEYING MOTOR
112
RECORDING HEAD
102
CARRIAGE
103
CARRIAGE DRIVE MOTOR
131
PLATEN
104
HEATER
141
WIPING APPARATUS
162
ROLLER DRIVE MOTOR
621c

FIG. 6

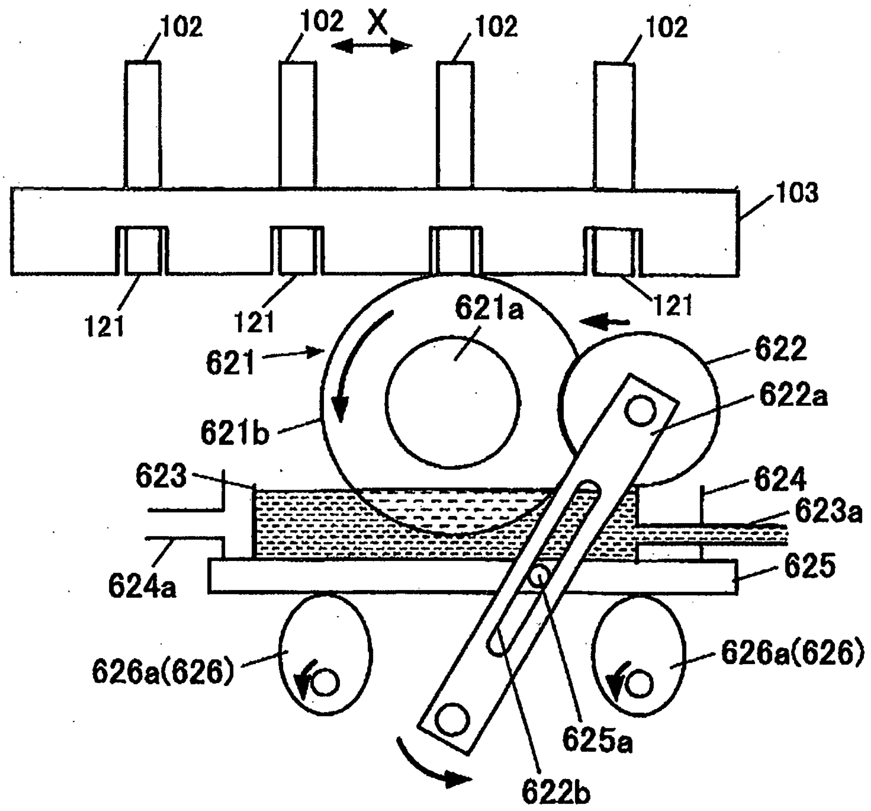
102
102
X
102
102
103
121
121
121
621a
621
622
622a
621b
623
624
623a
624a
625
626a(626)
626a(626)
625a
622b

FIG. 7A

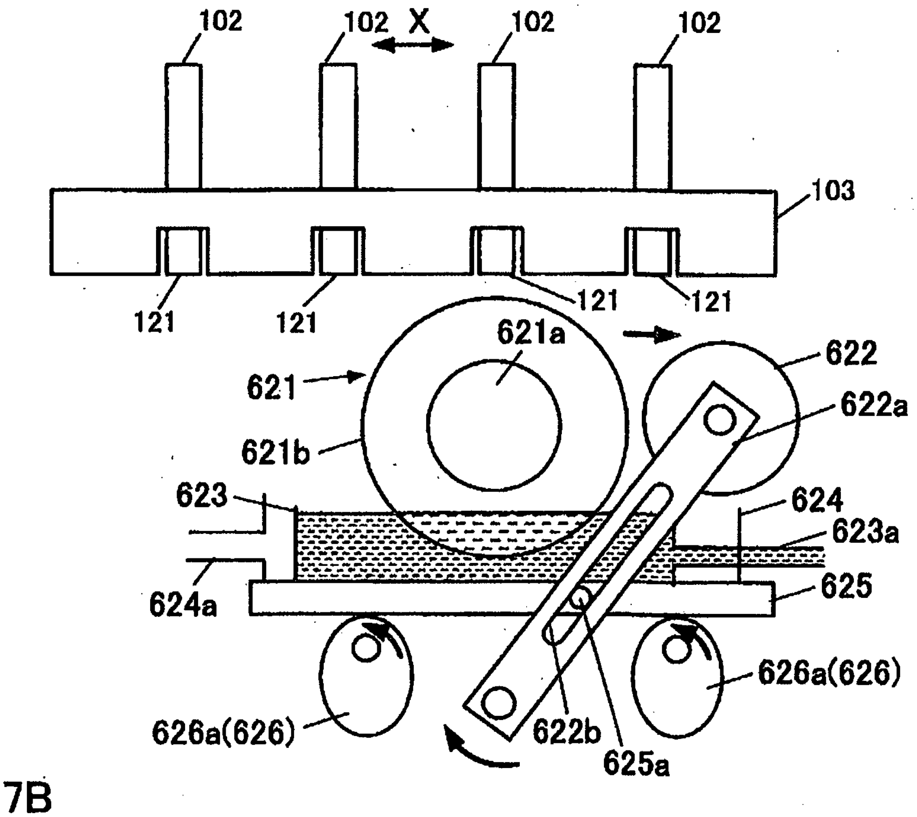
102
102
X
102
102
103
121
121
121
121
621a
622
621
622a
621b
623
624
623a
624a
625
626a(626)
626a(626)
622b
625a

FIG. 7B

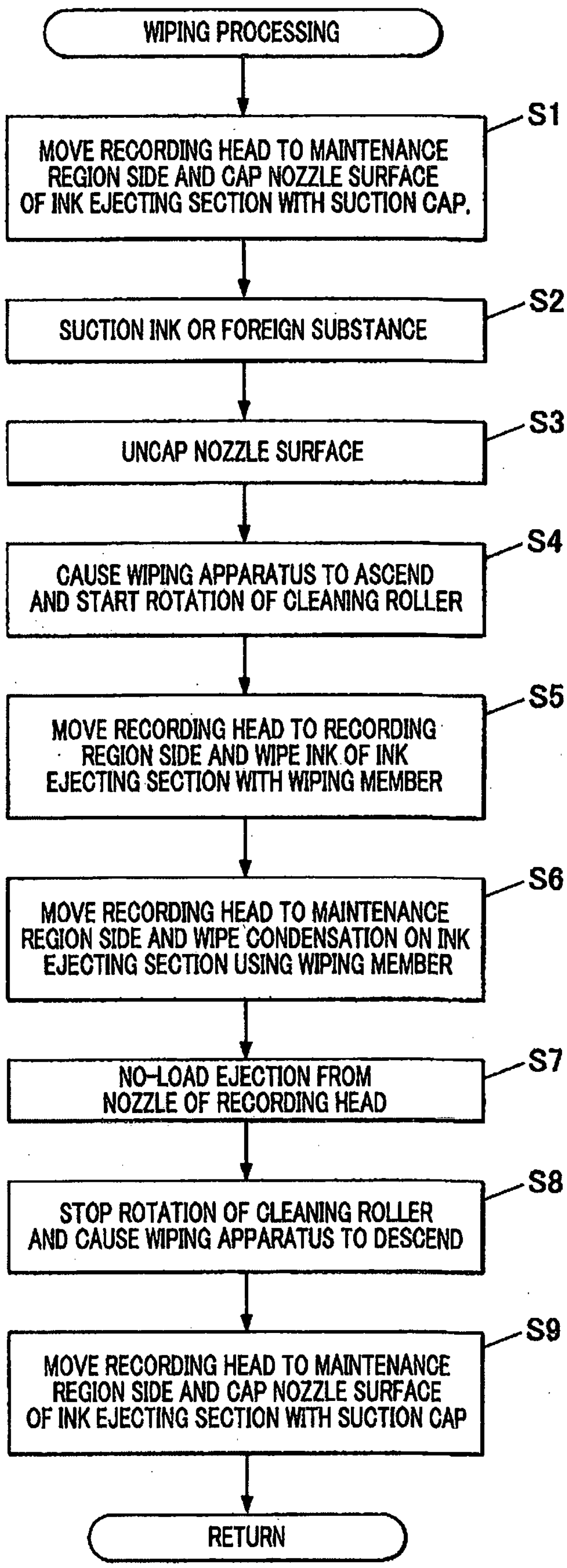
WIPING PROCESSING
S1
MOVE RECORDING HEAD TO MAINTENANCE REGION SIDE AND CAP NOZZLE SURFACE OF INK EJECTING SECTION WITH SUCTION CAP.
S2
SUCTION INK OR FOREIGN SUBSTANCE
S3
UNCAP NOZZLE SURFACE
S4
CAUSE WIPING APPARATUS TO ASCEND AND START ROTATION OF CLEANING ROLLER
S5
MOVE RECORDING HEAD TO RECORDING REGION SIDE AND WIPE INK OF INK EJECTING SECTION WITH WIPING MEMBER
S6
MOVE RECORDING HEAD TO MAINTENANCE REGION SIDE AND WIPE CONDENSATION ON INK EJECTING SECTION USING WIPING MEMBER
S7
NO-LOAD EJECTION FROM NOZZLE OF RECORDING HEAD
S8
STOP ROTATION OF CLEANING ROLLER AND CAUSE WIPING APPARATUS TO DESCEND
S9
MOVE RECORDING HEAD TO MAINTENANCE REGION SIDE AND CAP NOZZLE SURFACE OF INK EJECTING SECTION WITH SUCTION CAP
RETURN

FIG. 8

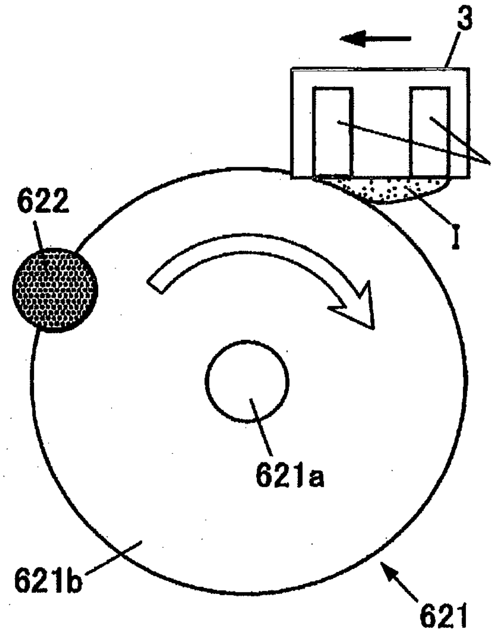


FIG. 9A

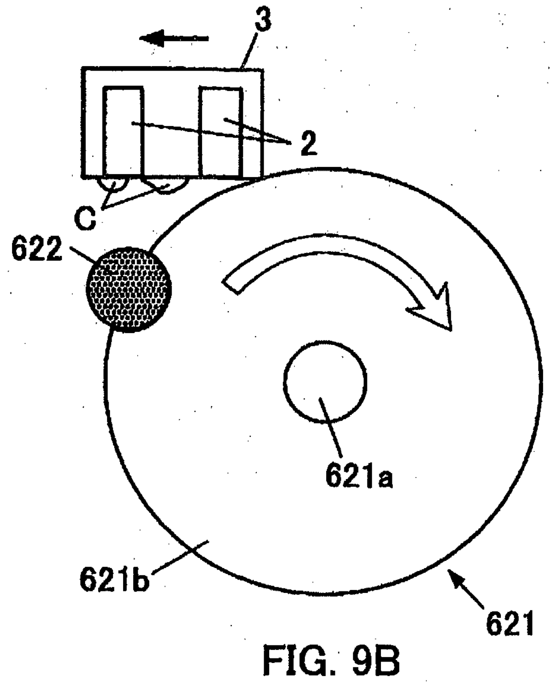


FIG. 9B

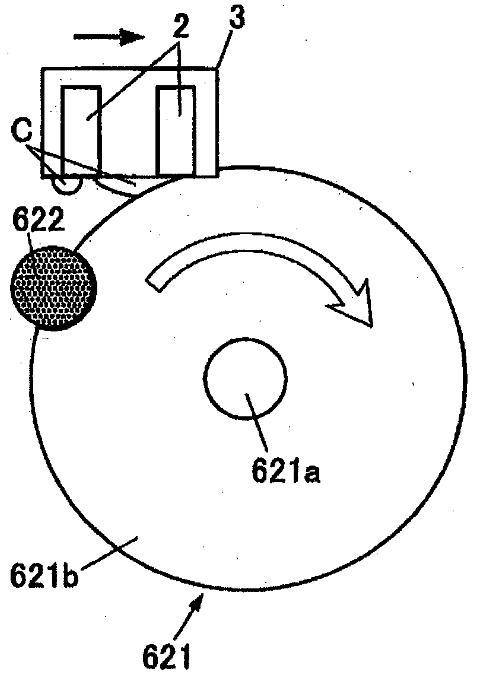


FIG. 9C

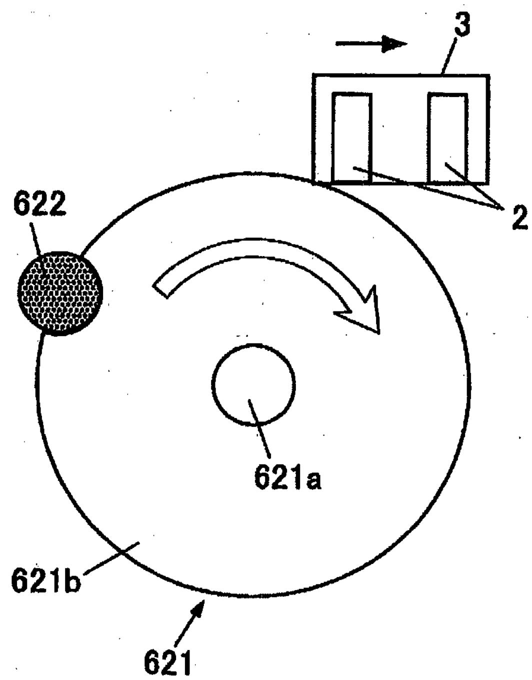


FIG. 9D

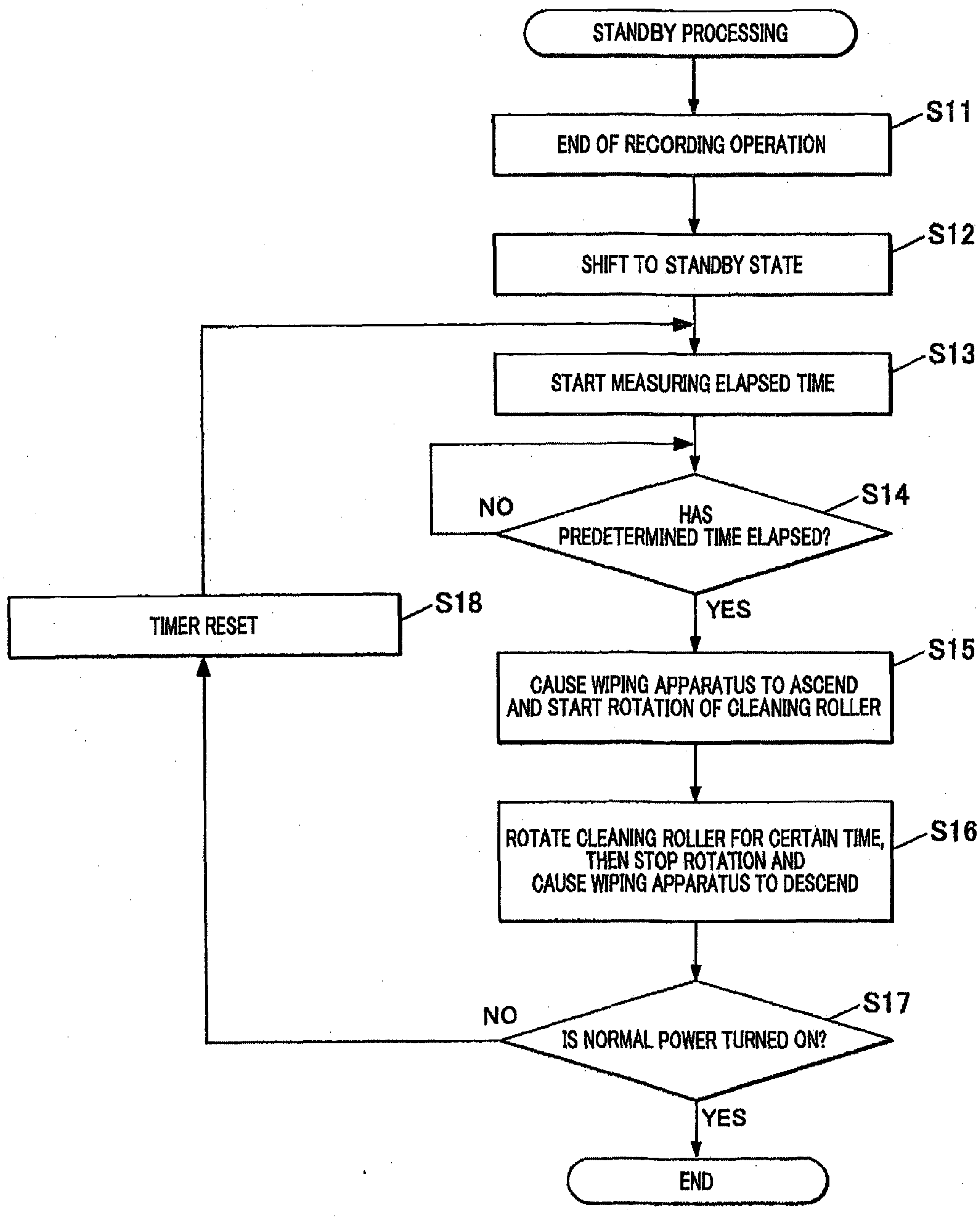
STANDBY PROCESSING
END OF RECORDING OPERATION
S11
SHIFT TO STANDBY STATE
S12
START MEASURING ELAPSED TIME
S13
HAS PREDETERMINED TIME ELAPSED?
S14
NO
YES
TIMER RESET
S18
CAUSE WIPING APPARATUS TO ASCEND AND START ROTATION OF CLEANING ROLLER
S15
ROTATE CLEANING ROLLER FOR CERTAIN TIME, THEN STOP ROTATION AND CAUSE WIPING APPARATUS TO DESCEND
S16
IS NORMAL POWER TURNED ON?
S17
NO
YES
END

FIG. 10

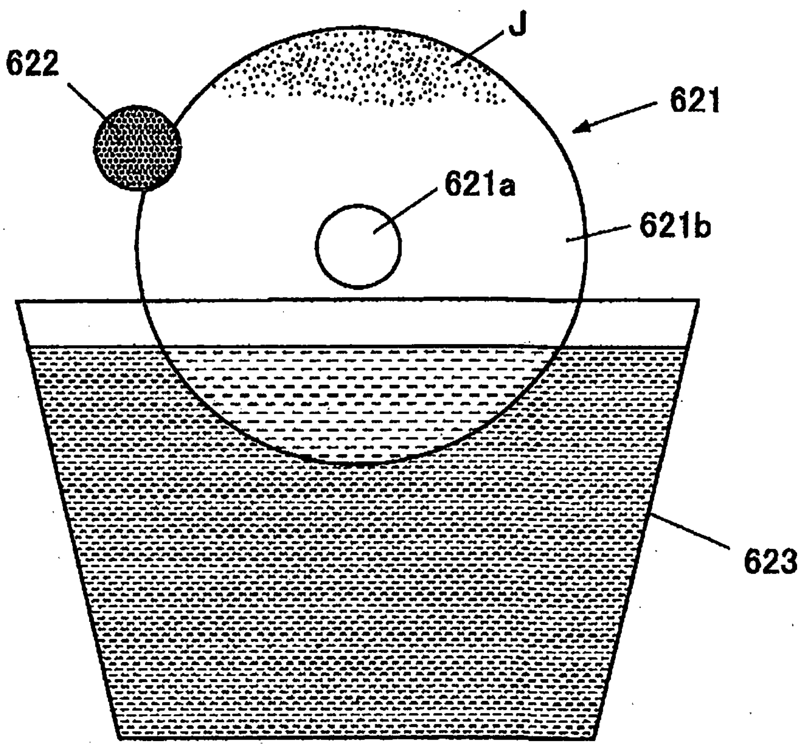


FIG. 11A

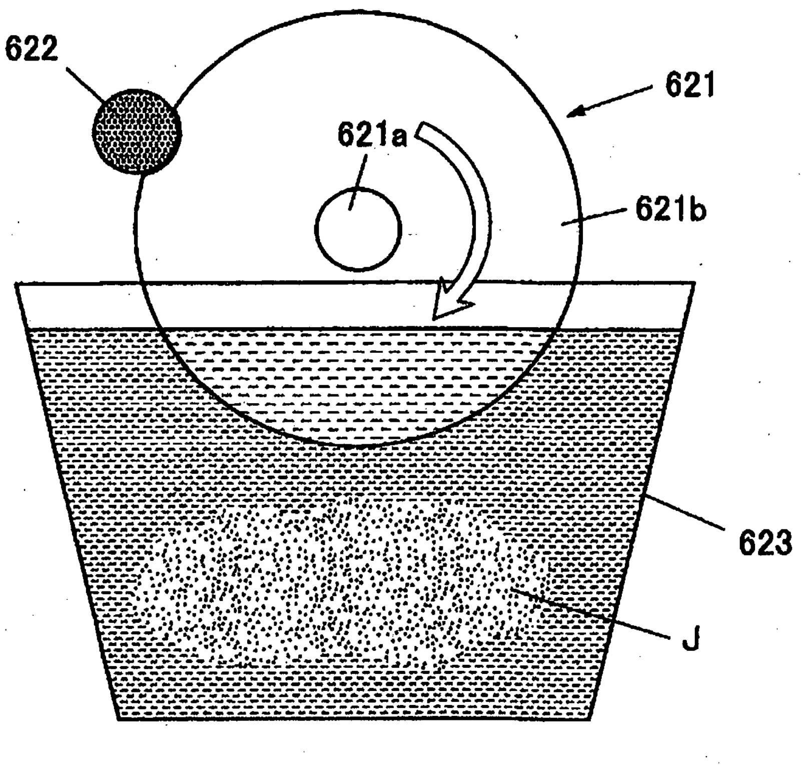


FIG. 11B

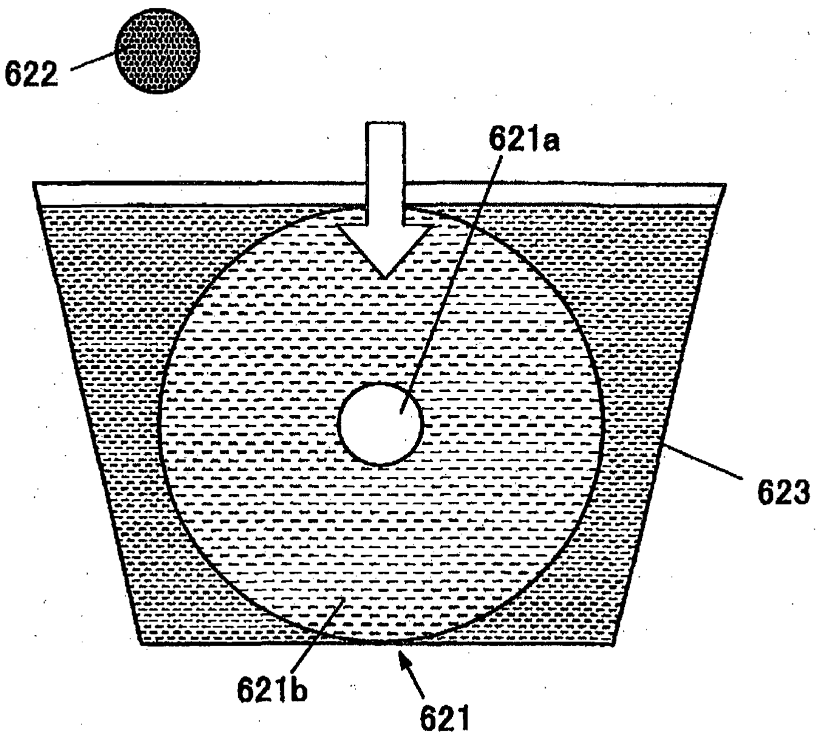


FIG. 12A

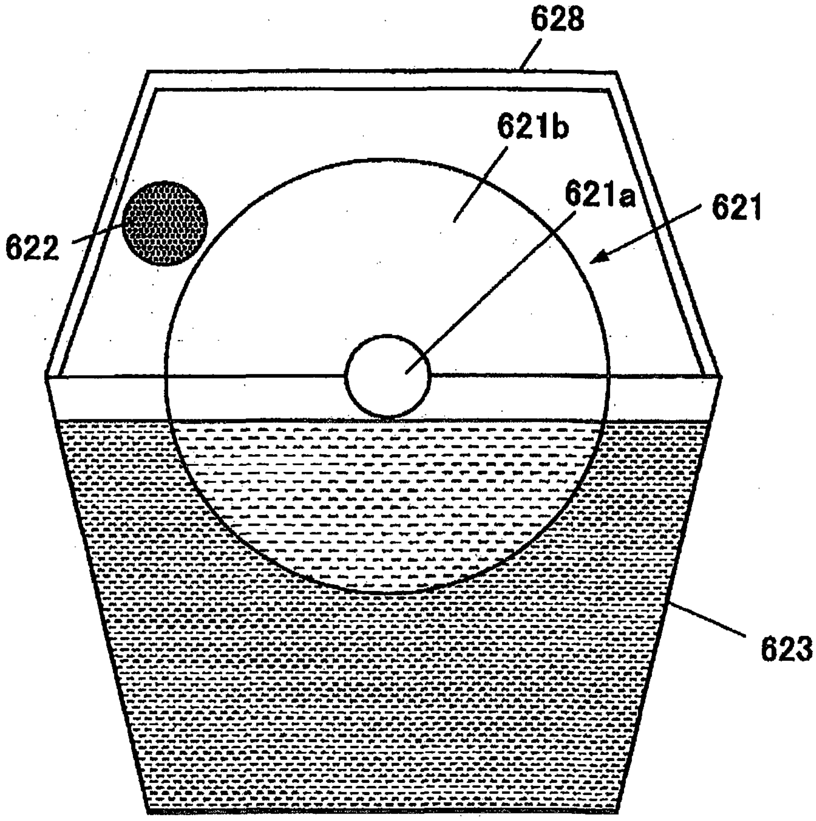


FIG. 12B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008208153 A
- JP 2010168433 A
- JP 11078112 A
- JP 2009185079 A
- WO 2008102615 A
- JP 57074193 A
- JP 57087988 A
- JP 62261476 A
- JP 57074192 A
- JP 57087989 A
- JP 60072785 A
- JP 61146591 A
- JP 1095091 A
- JP 3013376 A
- JP 59042993 A
- JP 59052689 A
- JP 62280069 A
- JP 61242871 A
- JP 4219266 A